(19) Europäisches Patentamt
European Patent Office
Office européen des brevets

(11) EP 1 182 579 A1

# (12) EUROPÄISCHE PATENTANMELDUNG

(43) Veröffentlichungstag:
**27.02.2002 Patentblatt 2002/09**

(51) Int Cl.7: **G06F 17/30**

(21) Anmeldenummer: **00127947.0**

(22) Anmeldetag: **21.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **26.08.2000 DE 10041980**
**23.10.2000 DE 10052980**
**19.10.2000 EP 00122804**

(71) Anmelder:
- **Clausen, Michael, Prof., Dr.**
**53121 Bonn (DE)**
- **Kurth, Frank, Dr.**
**53604 Bad Honnef (DE)**
- **Goemann, Heiko, Dr.**
**67433 Neustadt (DE)**
- **Meyer, Dirk, Dipl.-Inform.**
**51373 Leverkusen (DE)**

(72) Erfinder:
- **Clausen, Michael, Prof., Dr.**
**53121 Bonn (DE)**
- **Kurth, Frank, Dr.**
**53604 Bad Honnef (DE)**
- **Goemann, Heiko, Dr.**
**67433 Neustadt (DE)**
- **Meyer, Dirk, Dipl.-Inform.**
**51373 Leverkusen (DE)**

(74) Vertreter: **Springorum, Harald, Dr. et al**
**Kiani & Springorum, Patent- und Rechtsanwälte,**
**Heinrich-Heine-Allee 29**
**40213 Düsseldorf (DE)**

## (54) Verfahren und System zur Erstellung geeigneter Indizes zur verbesserten Suche in Datenbanken, vorzugsweise in Bild-, Ton- oder Multimediadatenbanken

(57) Verfahren zur Erstellung eines elektronischen Indexes, geeignet zur schnellen Konstellationssuche, über einer elektronischen Datenbank mit einem Datenbestand, wobei der elektronische Index über der elektronischen Datenbank erstellt wird, und hierzu gebildete Indexobjekte in Klassen eingeteilt werden, welche jeweils aus einem Repräsentanten, nämlich einem Indexobjekt der jeweiligen Klasse, und aus Transformationsabbildungen aus einer Menge zulässiger Transformationsabbildungen bestehen, deren Mitglieder (Transformationsabbildungen) jeweils den gewählten Repräsentanten in Indexobjekte des Datenbestandes nur der jeweiligen Klasse überführen.

**FIG. 1**

Universum möglicher Datenobjekte
Datenbestand der Datenbank
Universum möglicher Indexobjekte
Datenbestand der Indexobjekte
Datenobjekte
Indexobjekte
Umkehrvorschrift
Vergröberungsvorschrift

EP 1 182 579 A1

## Beschreibung

Die vorliegende Erfindung betrifft Verfahren zur Erstellung geeigneter Datenbankindizes zur schnellen Konstellationssuche sowie ein auf den Indizes operierendes Verfahren zur schnellen Konstellationssuche in elektronischen Datenbanken, vorzugsweise in Bild-, Ton- oder Multimediadatenbanken.

Die Aufbereitung und Bereitstellung von elektronischen Daten aller Art und das darauffolgende Einrichten von Datenbanken sollen den Zugriff auf eben diese Daten komfortabel und schnell ermöglichen. Die ständig anwachsende Datenmenge, die nicht nur aus den aktuell gewonnenen Informationen, sondern auch durch die Aufbereitung von "alten" Informationen, die noch auf anderen Datenträgern gespeichert sind, gespeist wird, hat ungeheure Ausmaße angenommen. Hinzu kommt, daß die weltweite Vernetzung auch räumlich weit auseinander liegende Datenbanken zusammenführt und somit jede elektronisch gespeicherte Information in eine dafür geeignete Datenbank überspielt werden kann.

Der Umfang der Datenbanken wächst somit derzeit oftmals extrem schnell an. Die Verfahren der Datenbankanfragen, also der einzig mögliche Weg die gewünschte Information selektiv präsentiert zu bekommen, haben sich allerdings bedauerlicherweise nicht so rasant weiterentwickelt, um mit den angewachsenen Datenmengen Schritt halten zu können.

Vereinfacht betrachtet ist eine Datenbank eine Sammlung von Datenobjekten. Die Datenobjekte bilden die elementaren Einheiten zur Speicherung von Nutzdaten. Die Nutzdaten innerhalb einer Datenbank sind meistens so gegliedert, daß gleiche Arten von Nutzdaten immer an der gleichen Stelle in einer logischen Ordnungsstruktur abgelegt sind. Die Nutzdaten sind dabei meist vom gleichen Typ. Diese Art der Datenspeicherung ist jedoch nicht zwingend, kann hier aber im weiteren als Stütze des Vorstellungsvermögens dienen. Auch das Bild einer tabellarischen Abspeicherung der Daten, wobei Zeilen und Spalten jeweils bestimmte Merkmale beschreiben, kann als stark vereinfachtes Modell für das menschliche Vorstellungsvermögen angenommen werden. Wie die Daten dabei letztlich physikalisch auf dem Speichermedium angeordnet sind ist zunächst für die Modellvorstellungen unerheblich.

Die Menge aller in einer Datenbank gespeicherten Datenobjekte wird als Datenbestand der Datenbank bezeichnet. Die Menge aller überhaupt möglichen Datenobjekte zu einem gegebenen Typ bildet das Universum der Datenobjekte. Der Datenbestand der Datenbank ist somit stets eine Teilmenge des Universums von Datenobjekten eines bestimmten Typs.

Die Suche nach Informationen in einer Datenbank setzt formal korrekte Suchanfragen voraus. Zu gegebenen Nutzdaten sind diejenigen Datenobjekte im Datenbestand der Datenbank zu bestimmen, welche mit den vorgegebenen Nutzdaten in einer genau - in der Anfrage - zu definierenden Verbindung stehen. Eine Methode hierzu besteht darin, alle Datenobjekte des Datenbestandes nacheinander zu betrachten und jeweils zu vergleichen, ob die Nutzdaten eines Datenobjekts mit denen der Anfrage übereinstimmen.

Folgendes Beispiel soll dabei helfen die jeweiligen Begriffe richtig einzuordnen: Eine Anfrage an eine Adressdatenbank (etwa ein Telefonbuch) kann lauten: "Finde alle Datenobjekte (Einträge in das Telefonbuch) die als Vornamenkennzeichen den String 'Paul' aufweisen". Der String 'Paul' stellt in diesem Fall die Menge der gegebenen Nutzdaten dar. Diese Anfrage kann so gelöst werden, daß jeder Eintrag gelesen wird und alle darin vorkommenden Vornamenkennzeichen mit dem String 'Paul' verglichen werden; bei Übereinstimmung wird dieses Datenobjekt (bestehend aus einem Datensatz der natürlich mehr enthält als nur den String Paul, nämlich etwa noch Nachnamen, Adressen und Telefonnummern) zur Menge der gefundenen Nutzdaten hinzugefügt. Diese Menge der gefundenen Datenobjekte wird auch als Ergebnis der Suchanfrage bezeichnet, wobei an dieser Stelle erwähnt sei, daß im Text hier Menge auch im mathematischen Sinne einer Multimenge verwendet wird, also u.U. auch für Mengen steht, in denen Elemente mehrfach vorkommen können.

Diese Methode zur Datensuche durchläuft bei jeder Anfrage den vollständigen Datenbestand und ist deshalb sehr zeitaufwendig und damit auch kostenintensiv und wird daher kaum eingesetzt.

Vorteilhaftere Verfahren zur schnelleren Suche in Datenbanken erstellen deshalb in einem Vorverarbeitungsschritt bestimmte Indexstrukturen. Hierbei wird ausgenutzt, daß es oft vorteilhaft ist, in einer Anfrage nur bestimmte Teile oder abgeleitete Aspekte der Nutzdaten genau zu spezifizieren, da ja nur bestimmte Informationen, also Nutzdaten, erfragt werden. Zur Erstellung eines Indexes legt man sich vorab darauf fest, welche Teile oder abgeleiteten Aspekte der Datenobjekte zur Anfrage verwendet werden sollen. Es gehen also bewußt Informationen verloren, die nicht durch die Indexierung erfaßt werden sollen. Allen vorhandenen Datenobjekten werden bei der Indexierung Indexobjekte zugeordnet. Die Anleitung zu dieser Zuordnung (Abbildung) wird Vergröberungsvorschrift genannt. Die Suche erfolgt dann auf der Menge der Indexobjekte. Um Ergebnisse dieser Suche mit dem Datenbestand der Datenbank in Verbindung bringen zu können, ist es notwendig, daß eine Umkehrvorschrift existiert, die einem Indexobjekt die Menge der Datenobjekte zuordnet, die mittels der Vergröberungsvorschrift eben dieses Indexobjekt ergeben. Es kann dabei vorkommen, daß diese Beziehung eine Eins-zu-Eins-Beziehung ist, d.h. jedem Datenobjekt entspricht genau ein Indexobjekt und umgekehrt. In einem Spezialfall kann es sogar vorkommen, daß die Datenobjekte mit den Indexobjekten übereinstimmen, also keine explizite Zuordnung zwischen beiden Arten von Objekten notwendig ist.

Analog zum Universum aller Datenobjekte gibt es das Universum aller überhaupt möglicher Indexobjekte.

Zur Erstellung eines Indexes nach dem Stand der Technik wird eine geeignete Teilmenge von Indexobjekten ausgewählt. Zu jedem dieser Indexobjekte wird eine Menge von Verweisen angelegt. Die Verweise zu einem solchen ausgewählten Indexobjekt lokalisieren diejenigen Indexobjekte innerhalb des Datenbestands der Indexobjekte, deren Nutzdaten mit denen des ausgewählten Indexobjektes übereinstimmen. Ein ausgewähltes Indexobjekt zusammen mit den ihm zugeordneten Verweisen bildet einen sogenannten Indexeintrag.

Ein Anwendungsbeispiel hierzu stellt ein Stichwortindex eines Buches dar. Die ausgewählten Indexobjekte enthalten als Nutzdaten die im Kontext des Buches relevanten Stichworte. Die Verweise zu einem Indexobjekt sind diejenigen Stellen innerhalb des Buches, z.B. spezifiziert durch Seitenzahlen, an denen das zu dem Indexobjekt gehörige Stichwort vorkommt.

Die Suche anhand eines solchen Indexes arbeitet unter Verwendung der bei der Indexkonstruktion ausgewählten Indexobjekte. Es sind innerhalb einer Anfrage nur solche Indexobjekte verwendbar, zu denen es auch Indexeinträge gibt. Zur Suche bei einer gegebenen Indexanfrage wird der Indexeintrag bestimmt, bei dem die Nutzdaten des Indexobjekts mit den Nutzdaten des Indexobjekts der Indexanfrage übereinstimmen. Die Menge der Treffer zur Indexanfrage ist die Menge der Indexobjekte, die mit Hilfe der Verweise zu diesem Indexeintrag bestimmt werden kann.

Auf das Beispiel des Stichwortindexes übertragen bedeutet dies, daß mit einem solchen Index nur Stichwörter gesucht werden können, nicht aber beliebige im Buch vorkommende Worte.

Zum Abschluß der Indexsuche kann jedes Indexobjekt der Treffermenge dann zwecks Bestimmung der Treffermenge bezüglich des Datenbestands der Datenbank mit Hilfe der Umkehrvorschrift einer entsprechenden Menge von Datenobjekten zugeordnet werden.

In Datenbanken vorliegende Informationen können aber auch in viel komplexeren Strukturen gespeichert werden. Die heutzutage üblichen Multimediadateien, in denen audiovisuelle Informationen als bewegte Bilder, Standbilder mit Text und/oder Ton unterlegt, vorliegen, sind meist nicht nur lineare Datenstrings, vielmehr finden in ihnen meist andere komplexere Formate Verwendung. Wo jedoch keine linearen Datenstrings zur Suche vorhanden sind, sind die einzelnen Datenobjekte und deren Beziehungen untereinander die neuen Kriterien, nach denen die Suche stattfinden muß. Diese Datenobjekte und deren Beziehungen untereinander kann man als Konstellationen bezeichnen, so daß die Suche in solch komplexen Datenbanken Konstellationssuche genannt wird.

Ein wichtiges Beispiel für eine solche Konstellationssuche stellt etwa die Suche nach bestimmten Themen oder Melodien oder Melodiefragmenten in Musikstücken dar. Ein anderes Beispiel stellt die Konstellationssuche in Bilddateien dar, worin etwa bestimmte fragmentarische Bildstrukturen erkannt und gefunden werden sollen. Der Stand der Technik bietet hierzu bislang kein Suchverfahren an, welches eine auch nur halbwegs befriedigende Leistung erbringen würde.

Für hochgradig spezielle - und einfache - Formate wie monophone Musik gibt es zwar Lösungen zur Konstellationssuche hierin. Diese schränken jedoch die Konstellationen, die gesucht werden können, auf sehr einfache Fälle ein. Ein Beispiel hierfür ist eine Konstellationssuche, die nur die Suche nach zusammenhängenden Melodiefragmenten erlaubt (Tomonari Sonoda and Yoichi Muraoka. A www-based melody-retrieval-system - an indexing method database. In Proc. ICMC 2000, Berlin, Seiten 170-173, 2000.)

Nachteil dieser Konstellationssuche ist allerdings, daß der Vorbereitungsschritt der Indexierung einer Datenbank der Größenordnung von 100 MB zu einem Index von 500 MB führt. Es findet also eine Aufblähung des Speichervolumens um das Fünffache statt. Auch der Zeitaufwand für eine solche Indexierung ist mit knapp 24 Stunden für 100 MB sehr lang.

Eine ausreichend schnelle allgemein verwendbare Konstellationssuche auch in komplexen Datenbanken mit großen Datenmengen nach charakteristischen Konstellationen, etwa nach Teilen aus polyphonen Musikstücken, oder bestimmten Konstellationen von ausgezeichneten Lokalitäten in elektronisch gespeicherten Karten oder auch Konstellationen in Bilddaten (etwa Fragmenten in Videosequenzen) ist hingegen nach dem Stand der Technik bis heute nicht möglich.

Eine solche Konstellationssuche wäre vorstellbar, wenn es gelänge die Komplexität und den Umfang solcher Datenbanken auf einen zur Konstellationssuche geeigneten Umfang zu bringen, um dann hierin die Konstellationssuche schnell durchführen zu können.

Aufgabe der vorliegenden Erfindung ist es daher, ein Verfahren zur Erstellung eines Index über einer elektronischen Datenbank anzugeben, welcher die schnelle Konstellationssuche in den Datenbeständen der elektronischen Datenbank ermöglicht, und gleichzeitig den Umfang des Index möglichst gering hält.

Diese Aufgabe wird erfindungsgemäß durch ein Verfahren zur Erstellung eines elektronischen Index, geeignet zur schnellen Konstellationssuche, über einer elektronischen Datenbank mit einem Datenbestand, gelöst, wobei der elektronische Index über der elektronischen Datenbank erstellt wird, und hierzu gebildete Indexobjekte in Klassen eingeteilt werden, welche jeweils aus einem Repräsentanten, nämlich einem, vorzugsweise frei wählbaren, Indexobjekt der jeweiligen Klasse und aus Transformationsabbildungen aus einer Menge zulässiger Transformationsabbildungen bestehen, deren Mitglieder (Transformationsabbildungen) jeweils den gewählten Repräsentanten in Indexobjekte des Datenbestandes nur der jeweiligen Klasse überführen. Vorzugsweise besteht daher jede Klasse aus allen Transformationsabbildungen, die die Repräsentanten in Indexobjekte des Datenbestandes überführen, wobei besonders bevorzugterweise jedoch keine Redundanzen hinsichtlich der Transformationsabbildungen auftreten sollen, die zum gleichen Ergebnis führen.

Bevorzugterweise kann der erfindungsgemäße Index wie folgt aufgebaut werden:

Für jedes Indexobjekt des Datenbestandes werden Repräsentanten und Normierungsabbildungen (NT) bestimmt. Sodann werden zu der Klasse des Repräsentanten als weitere zugehörige Transformationsabbildungen die jeweiligen Umkehrabbildungen ($NT^{-1}$) der Normierungstransformationen (NT) hinzugefügt.

Im folgenden wird nun erläutert, wie der vorstehend erfindungsgemäß elektronisch (automatisch) erstellte Index tatsächlich die Voraussetzungen für die schnelle Konstellationssuche in Datenbanken schafft:

Der Datenbestand der Datenbank ist dabei etwa durch eine Menge von Datenobjekten, vorzugsweise durch Noten in polyphonen Musikstücken gegeben.

Zur elektronischen Erstellung des Index werden Datenobjekte in Indexobjekte überführt und die so gewonnene Menge an Indexobjekten bildet den Datenbestand der Indexobjekte, wobei jedem Indexobjekt eine Menge von Datenobjekten des Datenbestandes zugeordnet ist.

Weiterhin wird eine Menge von zulässigen Transformationsabbildungen bestimmt, die Indexobjekte in Indexobjekte überführen, so daß diese zulässigen Transformationsabbildungen eine Einteilung der Indexobjekte in Klassen ermöglichen, in dem Sinne, daß zwei Objekte genau dann derselben Klasse angehören, wenn es zulässige Transformationsabbildungen gibt, die sie ineinander überführen (transformieren). Auf das Beispiel der polyphonen Musikstücke gelesen stellen etwa Oktavtranspositionen der Noten oder auch zeitliche Translationen hinsichtlich der Einsatzzeit solche zulässigen Transformationsabbildungen dar. Aus jeder Klasse wird dabei ein Indexobjekt als Repräsentant gewählt.

Die Voraussetzungen für eine schnelle Konstellationssuche sind durch einen solchen erfindungsgemäß erstellten Index nun wie folgt gegeben:

Eine Suchkonstellation ist durch eine Menge von Indexobjekten gegeben. Die Suchkonstellation kann alternativ durch eine Menge von Datenobjekten gegeben sein. Zur Suche mit Hilfe des Indexes müssen diese Datenobjekte vorher mit Hilfe der Vergröberungsabbildung in Indexobjekte überführt werden.

Der erfindungsgemäß erstellte Index schafft die Voraussetzungen Suchkonstellationen effizient in die zugehörigen (Treffer-) Konstellationen des Datenbestandes zu überführen, da die im Index enthaltenen Transformationsabbildungen ja jedes einzelne Indexobjekt der Suchkonstellation in die zugehörigen Indexobjekte des Datenbestandes, die die Trefferkonstellation bilden, transformieren helfen. Gelesen auf das Beispiel der Musik, ergeben die im Index hinterlegten Transformationsabbildungen ausgehend von einem Repräsentanten als Anker alle zulässigen Transformationen in gleichartige - d.h. in der gleichen Klasse befindliche - Noten, also etwa alle Noten "a" mit unterschiedlicher Einsatzzeit und unterschiedlicher Oktavlage.

Die zu einem einzigen Indexobjekt der Suchkonstellation gehörige (Teil-)Treffermenge ergibt sich also als die Menge all der Transformationsabbildungen, die dieses Indexobjekt der Suchkonstellation in all die zugehörigen Indexobjekte des Datenbestandes überführen.

Damit ist durch den erfindungsgemäß erstellten Index bereits die Grundlage für eine schnelle Konstellationssuche gelegt. Doch bevor das auf der Verwendung dieses erfindungsgemäß erstellten Index basierende Verfahren zur schnellen Konstellationssuche vorgestellt wird, sei noch ein Beispiel für die Erstellung eines Indexes angeführt. Dabei wird ein Index vorzugsweise wie folgt erstellt:

Die Datenobjekte der vorliegenden Datenbank werden gesichtet. Liegen alle Datenobjekte in einem bestimmten Typ vor, so sind weitere vorbereitende Arbeiten nicht notwendig. Es müssen die Kriterien zur Spezifikation der Nutzdaten in die Vergröberungsvorschrift eingearbeitet werden, um so aus den Datenobjekten die Indexobjekte zu erhalten. Eine Vergröberung besteht vorzugsweise im gezielten Weglassen von Informationen, die zur effizienten Suche unnötig sind. Zur Identifikation einer Person in einer Adressdatenbank, genügen Name und Adresse als potentielle Suchfaktoren vollkommen, die Haarfarbe und der Familienstand können bei der Indexierung dagegen weggelassen werden. Eine Auswahl einer geeigneten Menge von zulässigen Transformationsabbildungen zur Konstellationssuche wird getroffen. Die Auswahl dieser Menge zulässiger Transformationsabbildungen ist dabei geeignet vorzunehmen. Vorzugsweise sind dabei solche Transformationsabbildungen zu wählen, die effizient ausführbar sind. Diese Transformationsabbildungen überführen dabei Indexobjekte in Indexobjekte, also, bei Anwendung auf jedes einzelne Indexobjekt einer Suchkonstellation, auch Suchkonstellationen in Suchkonstellationen. Das vereinfacht die Konstellationssuche dahingehend, daß die Anfrage gleichsam in der "Sprache der Indexobjekte" gestellt werden kann. Bei der Konstellationssuche in polyphonen Musikstükken kann also direkt nach gewünschten Notenkonstellationen mit Tonhöhen und Einsatzzeit gefragt werden. Weiterhin leistet die Menge der zulässigen Transformationsabbildungen - qua definitionem -, die Einteilung der Indexobjekte in Klassen. Zwei Indexobjekte gehören genau dann der gleichen Klasse an, wenn es mindestens eine Transformationsabbildung aus der Menge der zulässigen Transformationsabbildungen gibt, die eines der Indexobjekte in das andere überführt. Bei einem erfindungsgemäß konstruierten Index gibt es dann zu jeder Klasse genau einen Indexeintrag. Als Repräsentant eines Indexeintrages wird ein Indexobjekt aus der zum Indexeintrag gehörigen Klasse ausgewählt. Grundsätzlich ist es hierzu möglich, irgendeinen beliebigen Repräsentanten der Klasse zu wählen. Eine praktische und einfache Möglichkeit besteht etwa darin, das erste aufgefundene und als Repräsentanten geeignete Datenobjekt einfach als Repräsentanten zu wählen. Der weitere Inhalt des Indexeintrages besteht nun aus zulässigen Transformationsabbildungen, die den für die Klasse ausgewählten Repräsentanten in alle weiteren Indexobjekte des Datenbestandes überführen, die zur gleichen Klasse gehören. Weitere Auswahlmöglichkeiten können den Ausführungsbeispielen entnommen werden.

Nachdem nun durch das vorstehend erläuterte erfindungsgemäße Verfahren die Grundlage für eine schnelle Konstellationssuche gelegt ist, indem die zu einem einzigen Indexobjekt der Suchkonstellation gehörige (Teil-)Treffermenge sich als die Menge all der Transformationsabbildungen, die dieses Indexobjekt der Suchkonstellation in all die zugehörigen Indexobjekte des Datenbestandes überführen, ergibt, stellt sich damit nun die weitere Aufgabe, basierend auf dem erfindungsgemäßen Verfahren zur Erstellung eines Index, geeignet zur schnellen Konstellationssuche, auch tatsächlich ein solches Verfahren zur schnellen Konstellationssuche in komplexen Datenbeständen elektronischer Datenbanken, wie etwa Musikdatenbanken, Bilddatenbanken oder Multimediadatenbanken anzugeben.

Diese weitere Aufgabe wird durch ein elektronisches Verfahren zur schnellen Konstellationssuche einer durch Indexobjekte gegebenen Suchkonstellation in der elektronischen Datenbank, über die, unter Verwendung des vorstehend beschriebenen erfindungsgemäßen Verfahrens zur Indexierung ein Index erstellt wurde, gelöst, indem die Berechnung einer Treffermenge für die Suchkonstellation so erfolgt, daß

(1) zunächst für jedes Indexobjekt der Suchkonstellation aus der Menge zulässiger Transformationsabbildungen eine Untermenge von Transformationsabbildungen erzeugt wird, welche das Indexobjekt der Suchkonstellation in die Indexobjekte des Datenbestandes überführen und

(2) sodann aus den so erhaltenen Untermengen die Schnittmenge gebildet wird, welche sodann die Treffermenge darstellt.

In einer bevorzugten Ausführungsform erfolgt zunächst eine Normierung der Suchanfrage und dann nachfolgend entsprechend eine Renormierung der erhaltenen (Teil)Treffermengen. Dies ist immer dann angezeigt, wenn die Indexobjekte des Suchkonstellation den Repräsentanten der Klasse nicht in trivialer Weise ergeben, sondern zunächst mittels einer zulässigen Transformationsabbildung - oder einer Verknüpfung (Hintereinanderausführung) hiervon - auf diesen abgebildet werden müssen. Entsprechend muß diese Normierung dann nach Erhalt der (Teil-)treffermengen wieder korrigiert, d.h. renormiert werden.

Vorzugsweise wird dabei

(0) zunächst vor vorstehend beschriebenem Schritt (1) jedes Indexobjekt der Suchkonstellation durch eine Normierungsabbildung aus der Menge der zulässigen Transformationsabbildungen oder einer Verknüpfung dieser Transformationsabbildungen so normiert, daß die Anwendung der Normierungsabbildung (Transformation) auf das Indexobjekt der Suchkonstellation den Repräsentanten der Klasse ergibt, zu der das Indexobjekt der Suchkonstellation gehört, und

(1a) nach vorstehend beschriebenem Schritt (1) und vor vorstehend beschriebenem Schritt (2) sodann für jedes Element jeder Untermenge eine zulässige Transformationsabbildung ermittelt wird, welche sich aus einer Verknüpfung der Normierungsabbildung, welche zu dem zu der jeweiligen Untermenge zugehörigen Indexobjekt der Suchkonstellation gehört, mit dem jeweiligen Element der Untermenge ergibt, woraus sich als Ergebnis renormierte Untermengen ergeben. Diese renormierten Untermengen werden sodann in Schritt (2) zur Schnittmengenbildung verwendet.

Zunächst muß also eine Normierungsabbildung berechnet werden. Dazu können etwa alle zulässigen Transformationsabbildungen der jeweiligen Klasse nacheinander auf das entsprechende Indexobjekt der Suchkonstellation angewandt werden, wobei diejenige Transformationsabbildung, die den Repräsentanten der zugehörigen Klasse ergibt, dann die gesuchte Normierungstransformation (NT) darstellt. Vor Bildung der Schnittmenge aller (Teil-)Treffermengen (Untermengen der zulässigen Transformationsabbildungen) müssen die Elemente dieser (Teil-)Treffermengen dann zur Renormierung wiederum mit der zugehörigen Normierungsabbildung verknüpft werden (Verknüpfung = Hintereinanderausführung der Transformationsabbildungen), um die ursprüngliche Normierung, also die Abbildung des Indexobjektes der Suchkonstellation auf den Repräsentanten der Klasse wieder zu korrigieren. Sodann kann der zur Treffermenge führende Schnitt erfolgen. Darüber hinaus sind aber auch andere effiziente Bestimmungen möglich.

Insgesamt betrachtet kann die erfindungsgemäße schnelle Konstellationssuche somit vorzugsweise wie folgt ausgeführt werden:

Nach der erfindungsgemäß durchgeführten Indexierung des Datenbestandes einer vorliegenden elektronischen Datenbank wird zur Bestimmung der Treffermenge zunächst für jedes Indexobjekt der Suchkonstellation die Teiltreffermenge aller Transformationsabbildungen elektronisch bestimmt, die dieses Indexobjekt der Suchkonstellation in ein Indexobjekt des Datenbestandes überführen. Um dies effizient zu ermöglichen, werden die zulässigen Transformationsabbildungen (und somit implizit auch die Klasseneinteilung) vorab so gewählt, daß die Bestimmung jeder dieser Teiltreffermengen zu einem Indexobjekt der Suchkonstellation allein mit Hilfe des Indexeintrags zum Repräsentanten der Klasse des Indexobjekts und einer geeigneten Normalisierung durchgeführt werden kann. Die Teiltreffermenge eines Indexobjektes der Suchkonstellation kann mit Hilfe der Erkenntnis bestimmt werden, daß die Menge der Transformationsabbildungen, die dieses Indexobjekt der Suchkonstellation in die Indexobjekte des Datenbestandes überführen, gleich der Menge der Transformationsabbildungen ist, die aus Kompositionen der Transformationsabbildungen (=Verknüpfungen von Tranformationsabbildungen, vorzugsweise nämlich die Hintereinanderausführung der Transformationsabbildungen) besteht, die zunächst das Indexobjekt in den Repräsentanten seiner Klasse und danach den Repräsentanten in die Indexobjekte des Datenbestandes überführen. Die Treffermenge zu gegebener Suchkonstellation besteht aus der Menge der Transformationsabbildungen, die in jeder der Teiltreffermengen vorkommen und kann aus den Teiltreffermengen somit mittels einer Durchschnittbildung bestimmt werden.

Zur Verdeutlichung sei eine mögliche Anwendung in Form der Konstellationssuche von landschaftlichen oder architektonischen Gruppierungen in Karten angeführt. Hierbei können große Mengen von Landkarten nach geeigneter Vorbereitung und Indexierung nach bestimmten Kriterien durchsucht werden. Die Karten müssen hierzu in einer willkürlichen Reihenfolge durchnumeriert werden. Auch hier gilt der Grundsatz, daß eine möglichst sinnvolle und logische Vorgehensweise bei der Numerierung am Ende des Suchprozesses, also bei der Auswertung durch den Anwender nur Vorteile bringt. Für das Verfahren selbst ist die Reihenfolge der Numerierung unwichtig. Die Karten selbst werden nun in ein Gitternetz unterteilt. Ausgezeichnete Punkte, vorzugsweise Gebäude und Straßenzüge können jetzt in ihrer Ausdehnung und ihrem Verlauf durch Koordinaten beschrieben und eindeutig festgelegt werden. Der erste Schritt zur Indexierung besteht in der Vergröberung und Quantisierung der zur Verfügung stehenden Datenmenge. Die Gebäude werden etwa ihrem Schwerpunkt nach einzelnen Koordinaten zugeordnet. In diesem Schritt geht die Information über die Ausdehnung der Gebäude verloren, die allerdings auch für die schnelle Konstellationssuche nicht von Interesse ist. Auch können in diesem Schritt mehrere Gebäude einer Gebäudekoordinate zugeordnet werden. Da jetzt die Datenobjekte in Indexobjekte umgewandelt worden sind, kann jedes Gebäude durch Angabe der Koordinaten und der Landkartennummer identifiziert werden. Die Aufgabe der entsprechenden Umkehrvorschrift ist es dann, einer Gebäudekoordinate innerhalb einer bestimmten Landkarte die entsprechende Menge aller Gebäude zuzuordnen. Zur Indexerstellung muss in diesem Fall nun noch der Repräsentant eines jeden Indexeintrags gewählt werden. Hierzu kann eine geeignete Landkartennummer bestimmt werden.Es bietet sich hierzu etwa die erste Landkarte mit der Landkartennummer 0 an. Es kann sodann eine - dem Index entsprechende - Liste erstellt werden, in welcher alle Karten und alle Gebäude mit ihren Koordinaten eingetragen sind.

Bei quadratischer Gittereinteilung - entsprechend den Koordinaten - von m Zeilen und n Spalten sieht eine solche Liste dann etwa wie folgt aus:

| Repräsentant = KartenNr. 0 | Spalte 1 | Spalte2 | Spalte 7 | Spalte n |
|---|---|---|---|---|
| Zeile 1 | | **1, 3, 100** | | |
| Zeile 2 | **3, 5, 9** | | | |
| Zeile 10 | | | **2, 5, 89** | |
| Zeile m | | | | **1, 50, 43** |

Der Eintrag 1,3,100 bedeutet in diesem Fall, daß genau in den Landkarten 1, 3 und 100 der Datenbank Gebäude liegen, die dem Gitterpunkt (1,2) mit Hilfe der Vergröberungsvorschrift zugeordnet wurden. Die gleiche Liste mit exakt der gleichen Information in Tupelschreibweise sieht wie folgt aus:

$$(2, 1, (3, 5, 9)), (1, 2, (1, 3, 100)), (10, 7, (2, 5, 89)), (m, n,(1, 50, 43)).$$

Auch so kann jedes Gebäude identifiziert werden.

Bei der Wahl der zulässigen Transformationsabbildungen bietet es sich vorliegend nunmehr an, eine Durchsuchung aller Karten in aufsteigender Reihenfolge zu verwenden. Somit besteht die Menge der zulässigen Transformationsabbildungen aus den Transformationsabbildungen, die zur aktuell gegebenen Kartennummer eine Konstante hinzuaddieren.

Ein Repräsentant und die jeweilig ermittelte Menge der Transformationsabbildungen bilden jeweils eine Klasse. So bilden im vorliegenden Beispiel (2,1,0) als Repräsentant für Zeile 2, Spalte 1, Karte 0, sowie (3,5,9) als Menge der Transformationsabbildungen hierzu eine Klasse. (3,5,9) sind die Abbildungen, die die Kartennummern um +3, +5, bzw +9 erhöhen. In diesem Fall können die Transformationsabbildungen jedes Indexobjekt der Klasse nur in ein anderes Indexobjekt derselben Klasse überführen; sie führen keinesfalls aus der Klasse heraus (mathematisch betrachtet werden somit Äquivalenzklassen gebildet). Vorliegend bezieht sich die Menge der Transformationsabbildungen nur auf ein Indexobjekt, vorstellbar ist es aber auch, daß die Karten unter k verschiedenen Karten in etwa r verschiedenen Ordnern gesucht werden müssen. Dann kommen weitere Transformationsabbildungen, nämlich solche zur Änderung der Ordnernummer hinzu, die jedoch gleichfalls klassenerhaltend sind, vorliegend also nicht aus der, einer Gitterposition zugeordneten Klasse über alle Karten und womöglich auch alle Ordner hinausführt. Für den Fall der r Ordner bedeutet dies, dass auch jeder Ordner mit jeweils k Karten durchsucht werden muß.

Da der Repräsentant vorliegend die Koordinatenschnittpunkte der Landkarte mit der Nummer 0 darstellt, und die Menge der Transformationsabbildungen aus einem Tupel, welches wiederum alle Transformationsabbildungen beinhaltet, besteht, wird eine Klasse aus zwei Einträgen gebildet, nämlich dem Repräsentanten der Klasse und den zugehörigen zulässigen Transformationsabbildungen. Die Anzahl der Klassen ist durch die Anzahl der Koordinatenschnittpunkte gegeben.

Die schnelle Konstellationssuche in dem gebildeten Index verlangt nun die Zuordnung der Suchanfrage zu den jeweiligen Repräsentanten. Wird eine Anfrage bestehend aus einer zu suchenden Konstellation in Koordinatenschreibweise vorgenommen, so ist eine weitere Bearbeitung überflüssig. Die Koordinaten (x,y) können direkt in den gewählten Repräsentanten (x,y,0) umgewandelt werden. Die hierzu notwendige Funktion ist trivial. Der Komplexität der Zuordnung sind allerdings auch kaum Grenzen gesetzt, denn ein handelsüblicher Computer ist in der Lage schwierige Berechnungen angemessen schnell durchführen zu können. Alle vorgegebenen Karten werden nun nacheinander durch Anwendung der Transformationsabbildungen, also etwa der Abbildungen Kartennummer +3, +5 und +9 für die Koordinaten (= die Klasse) (1, 2) identifiziert. Das Ergebnis der Suche sind die (Teil-)Treffermengen, als die Menge der Transformationsabbildungen, die zu den Kartennummern führen, die das jeweils an einer angefragten Koordinate befindliche Gebäude enthalten.

Die Schnittmengenbildung aus diesen Mengen ergibt dann die Treffermenge für die angefragte Konstellation mehrerer Gebäude, also der angefragten Suchkonstellation.

Eine weitere bevorzugte Ausführungsform des elektronischen Verfahrens zur schnellen Konstellationssuche ist dadurch gekennzeichnet, daß eine unscharfe Suchkonstellation durch eine Menge von Komponentenmengen, jeweils bestehend aus Indexobjekten, gegeben ist und hieraus eine Menge exakter Suchkonstellationen gebildet wird indem alle Suchkonstellationen gebildet werden die entstehen, wenn jeweils aus jeder der Komponentenmengen genau ein beliebiges Indexobjekt ausgewählt wird und sodann die Bestimmung der Treffermenge so erfolgt, daß zunächst die Treffermengen aller sich ergebenden exakten Suchkonstellationen nach den vorstehend bereits beschriebenen Ausführungsformen des erfindungsgemäßen Verfahrens einzeln bestimmt werden und sodann die Treffermenge der unscharfen Suchkonstellation durch die Vereinigung aller zuvor für die jeweiligen exakten Suchkonstellationen ermittelten einzelnen Treffermengen gebildet wird.

Eine Suchkonstellation besteht aus einer Menge von Indexobjekten, eine unscharfe Suchkonstellation besteht allerdings aus einer Menge von Komponentenmengen, wobei jede der Komponentenmengen eine Menge von Indexobjekten ist. Eine unscharfe Suchkonstellation besitzt als Treffermenge die Vereinigung der Treffermengen aller Suchkonstellationen die entstehen, wenn aus jeder der Komponentenmengen genau ein Indexobjekt ausgewählt wird. Die Suchkonstellationen die entstehen, wenn aus jeder der Komponentenmengen genau ein Indexobjekt ausgewählt wird, heißen auch Komponentensuchkonstellationen. Die unscharfe Suchkonstellation ermöglicht somit, eine Vielzahl von Suchkonstellationen gleichzeitig als Anfrage zu spezifizieren.

Eine bevorzugte effiziente Durchführung der unscharfen Suche geschieht nach einer besonders bevorzugten Ausführungsform so, daß die unscharfe Suchkonstellation durch eine Menge von Komponentenmengen gegeben ist und hieraus eine Menge exakter Suchkonstellationen gebildet wird indem alle Suchkonstellationen gebildet werden, die entstehen, wenn jeweils aus jeder der Komponentenmengen genau ein beliebiges Indexobjekt ausgewählt wird und die Berechnung einer Treffermenge für die unscharfe Suchkonstellation so erfolgt, daß

(1) für jede Komponentenmenge der unscharfen Suchkonstellation eine Untermenge von Transformationsabbildungen bestimmt wird, bestehend aus allen Transformationsabbildungen, die irgendein Indexobjekt dieser Komponentenmenge in ein Indexobjekt des Datenbestands überführen, und

(2) aus den für alle Komponentenmengen so bestimmten Untermengen die Schnittmenge gebildet wird, welche die Treffermenge darstellt.

In diesem Zusammenhang sei erwähnt, daß auch nach der unmittelbar vorstehend beschriebenen Ausführungsform vorzugsweise eine Normierung der Suchanfrage erfolgt und dann nachfolgend entsprechend eine Renormierung der erhaltenen (Teil-)Treffermengen, wobei diese Normierung entsprechend der bereits beschriebenen Normierung erfolgt und zwar hier vorliegend mit der Maßgabe, daß hier die Indexobjekte der zur unscharfen Suchanfrage gehörenden exakten Suchkonstellationen normiert werden. Eine solche Normierung ist immer dann angezeigt, wenn diese Indexobjekte den Repräsentanten der Klasse nicht in trivialer Weise ergeben, sondern zunächst mittels einer zulässigen Transformationsabbildung - oder einer Verknüpfung (Hintereinanderausführung) hiervon - auf diesen abgebildet werden müssen. Entsprechend muß diese Normierung dann nach Erhalt der (Teil-)treffermengen wieder korrigiert, d.h. renormiert werden, was dann gleichfalls entsprechend dem bereits erläuterten Verfahren geschehen kann.

Eine weitere Ausführungsform des erfindungsgemäßen Verfahrens ist dadurch gekennzeichnet, daß alle der unscharfen Suchkonstellation zugeordneten Suchkonstellationen mit einer Wichtung versehen werden und hieraus, vorzugsweise mittels einer Berechnungsvorschrift, zu jedem Element der Treffermenge ein Gewicht bestimmt wird.

Somit kann den gefundenen Treffern eine Qualität zugeordnet werden, welche natürlich nach Anzeige auf einem Bildschirm oder Ausdruck auch von dem Anwender kritisch geprüft werden kann. Durch ein geeignetes Modul kann die Wichtung auch durch den Anwender selbst vor dem Suchschritt vorgegeben werden. Zur Bestimmung einer Gewichtung der Treffermenge bei unscharfer Anfrage werden die Komponentensuchkonstellationen mit einer Gewichtung, einem Faktor oder einer Kennzahl, versehen. Die Gewichtung muß nicht unbedingt in Form eines Zahlenwertes vorgenommen werden, doch erleichtert dies die spätere Auswertung. Zu jedem Treffer der Treffermenge wird vorzugsweise mit Hilfe einer Berechnungsvorschrift eine Gewichtung bestimmt. In diesem Falle ist es weiterhin vorteilhaft, wenn die Gewichtungen positiv sind und sich die Gewichtungen aller Komponentensuchkonstellationen zu Eins addieren. Die Gewichtung zu einem Treffer kann dann so bestimmt werden, daß die Gewichtungen aller Komponentensuchkonstellationen, die diesen Treffer liefern, addiert werden. Nach Ermittlung der Gewichtungen der Treffer kann eine Reihenfolge der Treffer gemäß dieser Gewichtung bestimmt werden. So kann mit Hilfe unscharfer Suchkonstellationen qualitativ eine Nähe zu einer vorgegebenen Suchkonstellation gesucht werden. Die Güte der Treffer hängt dabei selbstverständlich von der Wahl der Gewichtung ab.

Eine weitere sehr bevorzugte Ausführungsform des vorliegenden erfindungsgemäßen Verfahrens sieht vor, daß die Menge zulässiger Transformationsabbildungen interaktiv festgelegt werden kann. Die Möglichkeit, die Konstellationssuche mehrmals hintereinander durchzuführen und dabei die zugrundeliegende Menge zulässiger Transformationsabbildungen zu variieren, insbesondere zu vergrößern oder zu verkleinern, ist ebenfalls eine gezielte Methode , um sich bei vagem Vorwissen über die gesuchte Konstellation Schritt für Schritt an das gewünschte Ergebnis "heranzutasten". Die Änderungder Menge aller zulässigen Transformationen hat eine Änderung der Klasseneinteilung zur Folge. Insbesondere kann durch eine Vergrößerung bzw. Verkleinerung der Menge der zugrundeliegenden Transformationen die Spezifikation der Anfrage, je nach vorhandenem Vorwissen über die Treffermenge, vergröbert bzw. verfeinert werden. Anders ausgedrückt, hat der Benutzer durch die Wahl der Transformationen die Möglichkeit, den Trefferbegriff zu variieren.

Auch können weitere Ausführungsformen des erfindungsgemäßen Verfahrens fehlertolerant arbeiten, indem sie zur Bestimmung der Treffermenge anhand einer vorgegebenen Fehleranzahl anstelle aus den erhaltenen Untermengen die Schnittmenge welche die Treffermenge darstellt, oder aus den für alle Komponentenmengen bestimmten Untermengen die Schnittmenge, welche gleichfalls die Treffermenge darstellt zu bilden, diejenige Menge aus Transformationsabbildungen als Treffermenge bilden, die in genau oder höchstens sovielen der Untermengen nicht vorkommen, wie die vorgegebene Fehleranzahl angibt.

Dabei kann das Verfahren für eine oder mehrere Fehleranzahlen durchgeführt werden und so eine Rangliste erstellt werden, wobei sich die Rangliste durch Auflistung der Treffer der Treffermengen in der Reihenfolge der Fehleranzahlen ergibt.

Eine weitere Ausführungsform betrifft die Erstellung verteilter Indexe und die parallelisierte Indexerstellung und Indexsuche. Hierzu ergeben sich verschiedene Möglichkeiten. In einem ersten Ansatz kann ein Index für N Dokumente so in zwei Unterindexe aufgeteilt werden, daß der erste Unterindex die ersten K (K sei kleiner als N) Dokumente und der zweite Unterindex die restlichen N-K Dokumente enthält. Die Treffermenge zu einer Indexanfrage besteht dann aus der Vereinigung der Treffermengen zu den Anfragen an die zwei Unterindexe.

In einer weiteren bevorzugten Ausführungsform wird der Index so verteilt, daß die Indexeinträge in verschiedene Unterindexe aufgeteilt werden. Da bei der Bestimmung der Treffermenge zu einer Anfrage in Schritt (2) lediglich Schnittmengen aus vorher bezüglich einzelner Indexeinträge bestimmten Untermengen gebildet werden, ist die Bestimmung der Treffermenge einer Indexanfrage durch die Schnittmenge der Treffermengen zu den Anfragen an die Unterindexe gegeben. Hierbei wird die Indexanfrage so in Anfragen an Unterindexe aufgeteilt, daß in einer jeden Anfrage an einen Unterindex genau diejenigen Indexobjekte aus der Indexanfrage verwendet werden, zu denen es auch Repräsentanten in einem Indexeintrag dieses Unterindexes gibt.

Weiterhin kann das erfindungsgemäße Verfahren vorzugsweise auch zur Erstellung von mindestens einem elektronischen Unterindex dienen, wobei zunächst ein elektronischer Index wie bereits eingangs erläutert gebildet wird und sodann hierauf aufbauend zumindest ein Unterindex gebildet wird, indem der Datenbestand der Indexobjekte eines jeweiligen Unterindex durch Anwendung einer zugehörigen Vergröberungsabbildung auf alle Indexobjekte des Indexes gebildet wird, wobei zu jedem Unterindex eine zugehörige Vergröberungsabbildung ausgewählt wird, die Indexobjekte auf Indexobjekte des Unterindexes abbildet, die zulässigen Transformationsabbildungen der Unterindexe mit denen des Indexes übereinstimmen, und die ausgewählten Vergröberungsabbildungen mit den zulässigen Transformationsabbildungen bezüglich der Reihenfolge der Ausführung vertauschbar sind.

Diese Ausführungsform des Verfahrens nach der vorliegenden Erfindung basiert auf dem Vorhandensein von zwei oder mehreren Vergröberungsabbildungen, die jeweils Indexobjekte auf Indexobjekte abbilden. Weiterhin müssen die zulässigen Transformationsabbildungen so gewählt werden, daß sie auch auf die nach Anwendung der Vergröberungsabbildung resultierenden Indexobjekte angewandt werden können. Zusätzlich müssen die Vergröberungsabbildungen mit den zulässigen Transformationsabbildungen verträglich sein in dem Sinne, daß es egal ist, ob zuerst die Vergröberungsabbildung und danach die Transformationsabbildung ausgeführt wird oder zuerst die Transformationsabbildung und danach die Vergröberungsabbildung. (Dies entspricht im übrigen dem weiter unten noch genau zu beschreibenden Konzept der *G*-Morphismen.) Aus einem Index werden nun Unterindexe erstellt, indem jedem Unterindex eine Vergröberungsabbildung zugeordnet wird. Einem Unterindex werden weiterhin die Indexobjekte zugeordnet, die aus der Anwendung der zu diesem Unterindex gehörigen Vergröberungsabbildung auf die Indexobjekte des Indexes entstehen.

Vorzugsweise werden die Vergröberungsbbildungen für die Unterindexe so gewählt, daß sie in ihrer Gesamtheit betrachtet den Voraussetzungen des Chinesischen Restesatzes genügen, was, wie später im Text noch erörtert wird, besonders vorteilhaft ist.

Zur schnellen Konstellationssuche in einer durch Indexobjekte gegebenen Suchkonstellation in einer elektronischen Datenbank, über die, unter Verwendung der vorstehend beschriebenen Ausführungsformen des erfindungsgemäßen Verfahrens der elektronische Index sowie mindestens ein elektronischer Unterindex erstellt wurde ist eine weitere bevorzugte Ausführungsform eines Verfahrens nach der vorliegenden Erfindung geeignet, bei der die Berechnung einer Treffermenge für eine Suchkonstellation so erfolgt, daß aus einer Suchkonstellation aus Indexobjekten für jeden Unterindex eine Unterkonstellation bestimmt wird, indem auf jedes Indexobjekt der Suchkonstellation die zum Unterindex zugehörige Vergröberungsvorschrift angewendet wird, für jeden Unterindex eine Untertreffermenge bezüglich der jeweiligen Unterkonstellation bestimmt wird, und aus den so bestimmten Untertreffermengen die Schnittmenge gebildet wird, welche die Treffermenge darstellt.

Somit kann eine Indexsuche einer Suchkonstellation anhand eines auf vorstehend beschriebene Weise verteilten Indexes dadurch erfolgen, daß zunächst für jeden Unterindex eine Unterkonstellation bestimmt wird. Diese Unterkonstellation besteht aus der Menge der Indexobjekte, die entstehen, wenn die zum Unterindex gehörige Vergröberungsabbildung auf die Indexobjekte der Suchkonstellation angewendet wird. Nachfolgend wird für jeden Unterindex anhand der jeweiligen Unterkonstellation eine Treffermenge bestimmt. Aufgrund der obigen Anforderungen an die Vergröberungsvorschriften und die zulässigen Transformationsabbildungen gilt, daß die Treffermenge zur Suchkonstellation bezüglich des Indexes (per Mengeninklusion) enthalten ist im Schnitt der Treffermengen der Unterkonstellationen bezüglich der Unterindexe. Anders ausgedrückt: alle Treffer zur Suchkonstellation sind auch Treffer zu den Unterkonstellationen. In einer bevorzugten Ausführungsweise werden die Vergröberungsabbildungen und die zulässigen Transformationsabbildungen so gewählt, daß die Treffermenge zur Suchkonstellation bezüglich des Indexes mit dem Schnitt der Treffermengen der Unterkonstellationen bezüglich der Unterindexe übereinstimmen.

Eine weitere Ausführungsform der vorliegenden Erfindung ist dadurch gekennzeichnet, daß die Menge der Indexobjekte aus Musiknoten besteht.

Vorzugsweise sind die Musiknoten als Indexobjekte dabei durch eine Tonhöhe und eine Einsatzzeit gegeben, wobei die Einsatzzeit durch eine Taktposition und eine metrische Position eindeutig bestimmt ist, und die Einteilung der Noten in Klassen so vorgenommen wird, daß eine Klasse genau die Noten beinhaltet, die durch eine übereinstimmende metrische Position und eine übereinstimmende Tonhöhe gekennzeichnet sind.

Eine weitere Ausführungsform ist dadurch gekennzeichnet, daß die Menge der Indexobjekte aus vorverarbeiteten audiovisuellen Daten besteht, wobei die Vorverarbeitung aus einer Spektraltransformation oder auch einer gefensterten Fouriertransformation bestehen kann. Auch können im Rahmen der Vorverarbeitung markante Punkte aus den audiovisuellen Daten extrahiert werden.

Die mathematische Begründung für das vorstehend beschriebene erfindungsgemäße Verfahren liefert eine Anwendung der Gruppentheorie, hier im folgenden unter Bezugnahme auf Beispiele für die Konstellationssuche in Musikdaten.

Der Konstellationsbegriff geht von einer Grundmenge $M$ aus, deren Elemente als die potentiellen elementaren Datenobjekte angesehen werden. Eine *Konstellation* setzt sich aus gewissen elementaren Datenobjekten zusammen, mit anderen Worten: Eine Konstellation $P$ ist also eine Teilmenge von $M$: $P \subseteq M$. Eine Teilmenge $T$ von $P$ heißt *Teilkonstellation* von $P$.

Es folgen zwei Beispiele für Konstellationen.

Es sei $M$ die Menge der endlichen Teilmengen der reellen Ebene $\mathbf{R}^2$. Ein Element von $M$ könnte man z.B.

interpretieren als die Auflistung markanter Punkte eines Gebäudegrundrisses. Eine Teilmenge von $M$ stellt damit eine Konstellation von Gebäuden dar.

Es sei $M = \mathbf{Z}^3$. Ein Tripel $(h,t,d)$ aus $M$ interpretieren wir etwa als eine Note der Tonhöhe $h$, die zur Einsatzzeit $t$ für die Dauer von $d$ Zeiteinheiten erklingt. Eine (endliche) Teilmenge von $M$ ist dann also interpretierbar als ein Musikstück.

Allgemein ergibt sich folgende Aufgabenstellung: Gegeben sei eine Datenbank, die aus $N$ Konstellationen $P_1,...,P_N$ der Menge $M$ besteht. Eine *Konstellationsanfrage* an diese Datenbank besteht aus einer weiteren Konstellation $T$ von $M$. Zu beschreiben sind nun alle *Vorkommen* von $T$ in den Konstellationen $P_1,...,P_N$. Ein Vorkommen wird auch als *Treffer* bezeichnet. Die Frage, was ein Treffer ist, hängt von der speziellen Aufgabenstellung ab. Generell liegt dem jeweiligen Trefferbegriff die Struktur einer (mathematischen) Gruppe zugrunde.

Eine *Gruppe* ist eine Menge $G$ zusammen mit einer Abbildung *, die je zwei Elementen $a,b$ aus $G$ eindeutig ein Element $a*b$ aus $G$ zuordnet. Diese Abbildung hat drei Eigenschaften zu erfüllen: erstens muß sie assoziativ sein, d.h., für alle $a,b,c \in G$ gilt $a*(b*c)=(a*b)*c$, zweitens muß es ein neutrales Element $e$ geben, d.h. für alle $a \in G$ ist $a*e=e*a=a$ und drittens muß es zu jedem $a \in G$ ein inverses Element $b$ mit $a*b=e$ geben. Eine Gruppe heißt *abelsch* oder *kommutativ*, wenn stets $a*b=b*a$ gilt. Es wird auch statt $a*b$ im folgenden oft kurz $ab$ (oder $a+b$ im kommutativen Fall) und für das neutrale Element $e$ oft 1 (oder 0 im kommutativen Fall) geschrieben.

Wir benutzen Gruppen, um angefragte Konstellationen auf erlaubte Weise zu 'verschieben'. Dies setzt das Konzept der $G$-Menge voraus.

Eine Menge $M$ wird zu einer $G$-Menge vermöge einer Abbildung $G \times M \to M$, $(g,m) \mapsto gm$, falls die folgenden Axiome erfüllt sind: $(gh)m = g(hm)$, $1m=m$, für alle $g,h \in G$ und alle $m \in M$. (Man sagt auch: *G operiert* auf $M$.)

Operiert $G$ auf $M$, so auch auf der sog. Potenzmenge $2^M$ von $M$, die aus allen Teilmengen (also aus allen Teilkonstellationen) von $M$ besteht. Diese Operation ist für $g \in G$ und $T \subseteq M$ gegeben durch:

$$gT := \{gt \mid t \in T\}.$$

Eine Konstellation wird also durch ein Gruppenelement $g$ verschoben, indem $g$ auf jedes Element $t$ der Konstellation $T$ angewendet wird. Betrachtet man aufgrund der Aufgabenstellung $2^M$ als G-Menge, so besteht die zur Anfragekonstellation $T$ gesuchte *Treffermenge* $G_P(T)$ aus allen Paaren $(g,i) \in G \times [1:N]$, so daß die mittels $g$ modifizierte Version $gT$ von $T$ Teilmenge der $i$-ten Konstellation der Datenbank ist:

$$G_P(T) := \{(g,i) \mid g \in G,\ i \in [1:N],\ gT \subseteq P_i\}.$$

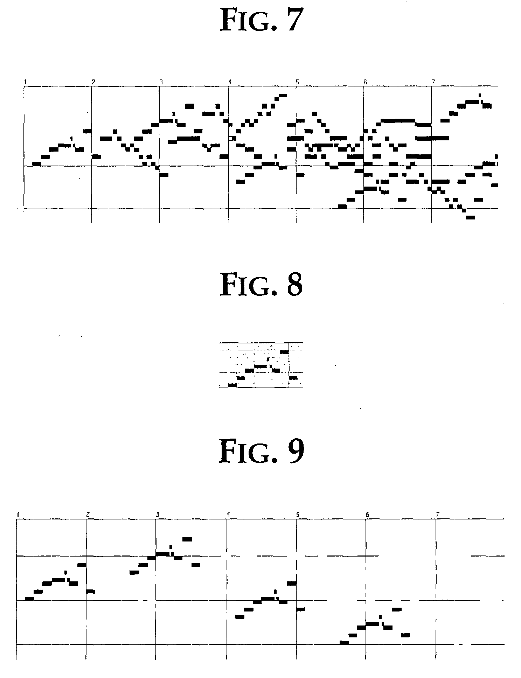

Die gerade eingeführten Konzepte und Sprechweisen werden anhand von Ausführungsbeispielen in den Figuren **7, 8** und **9** besprochen, die an dieser Stelle vor der weiteren Lektüre des Textes zur Kenntnisnahme anempfohlen seien.

Aus mathematischer Sicht liegt dem Übergang von Datenobjekten zu Indexobjekten das Konzept von $G$-Morphismen zugrunde. Gegeben seien zwei $G$-Mengen $M$ und $M'$. ($M$ interpretieren wir als das Universum der Datenobjekte, während $M'$ das Universum der Indexobjekte darstellt.) Ein *G-Morphismus* von $M$ nach $M'$ ist eine Abbildung $f : M \to M'$, die mit den beiden $G$-Operationen vertauscht, d,h, $f(gm)=gf(m)$ für alle $g \in G$ und $m \in M$. Mittels eines solchen $G$-Morphismus $f$ wird aus der Folge $P=(P_1,...,P_N)$ von *Objektkonstellationen* $P_i \subseteq M$ eine Folge von *Indexkonstellation* $P' = (P_1',...,P_N')$, wobei $P_i' := f(P_i) = \{f(m) \mid m \in P_i\}$. Zu einer angefragten Objektkonstellation $T \subseteq M$ besteht nun die Aufgabe in der effizienten Berechnung aller $G$-Treffer, d.h. aller Elemente aus

$$G_P(T) := \{(g,i) \mid g \in G,\ i \in [1:N],\ gT \subseteq P_i\}.$$

Ist $T' := f(T)$ die zu $T$ gehörige Indexkonstellation, so ist

$$G_{P'}(T') := \{(g,i) \mid g \in G,\ i \in [1:N],\ gT' \subseteq P_i'\}$$

die Menge aller $G$-Treffer auf Indexebene. Eine leichte Rechnung zeigt, daß die Treffermenge auf Objektebene stets eine Teilmenge der Treffermenge auf Indexebene ist: $G_P(T) \subseteq G_{P'}(T')$. Aus Gründen der Speichereffizienz wird man auf Indexebene arbeiten und dort geeignete Indexe (Indizes) zur schnellen Konstellationssuche aufbauen. Bei geeigneter Wahl der Indexebene werden sich die Treffermengen zur Index- bzw. Objektebene nur geringfügig unterscheiden.

Mittels elementarer Gruppentheorie wird nun eine Verbindung zwischen dem Problem der Konstellationssuche und Indexierungstechniken, die sich bei der Volltextsuche bewährt haben, hergestellt.

Zur effizienten Konstellationssuche arbeiten wir mit gewissen *G-invertierten Listen.* Diese sind für $m \in M'$ definiert durch

$$G_{p'}(m) := \{(g,i) \mid g \in G,\ i \in [1:N],\ gm \in P_i'\}.$$

Obwohl wir es bei den Indexkonstellationen typischerweise mit mehrelementigen Teilmengen von $M'$ zu tun haben, beziehen sich die Listen auf einzelne Indexobjekte. Die $G$-Treffermenge zur Indexkonstellation $T' \subset M'$ besteht offensichtlich aus denjenigen Paaren $(g,i)$, die in allen $G$-invertierten Listen $G_{p'}(m)$ zu sämtlichen $m \in T'$ liegen. Dies ist aber aus mathematischer Sicht gerade der Durchschnitt dieser Listen:

$$G_{p'}(T') = \cap_{m \in T'} G_{p'}(\mathrm{m}).$$

Um Konstellationsanfragen beantworten zu können, würde es aufgrund der letzten Formel genügen, *alle G*-invertierten Listen vorab zu berechnen und abzuspeichern, damit auf Anfrage $T'$ schnell der Durchschnitt der Listen zu den Elementen von *T' als* Antwort berechnet werden kann. Der Nachteil dieser Vorgehensweise ist augenscheinlich der enorme Speicheraufwand, um alle Listen abzuspeichern. Man kann den Speicherplatzbedarf im allgemeinen erheblich vermindern. Mathematischer Hintergrund ist das Bahnenkonzept.

Eine $G$-Operation auf der Menge $M$ definiert eine Äquivalenzrelation auf *M:* zwei Elemente $m, m' \in M$ heißen *G-äquivalent*, wenn es ein $g \in G$ gibt mit $m'=gm$. Die $G$-Äquivalenzklassen sind gerade die sogenannten *G-Bahnen*:

$$Gm := \{gm \mid g \in G\}.$$

Zwei G-Bahnen sind entweder gleich oder disjunkt, d.h. sie haben kein gemeinsames Element. Demnach zerfällt $M$ disjunkt in G-Bahnen.

Es besteht nun zwischen den G-invertierten Listen zu den Elementen einer $G$-Bahn von $M'$ folgender Zusammenhang:

$$\mathrm{G_{P'}}(\mathrm{xm}) = \mathrm{G_{P'}}(\mathrm{m})\mathrm{x}^{-1} := \{(\mathrm{gx}^{-1},\mathrm{i}) \mid (\mathrm{g,i}) \in \mathrm{G_{P'}}(\mathrm{m})\},$$

für $m \in M'$ und $x \in G$.

Statt *alle G*-invertierten Listen abzuspeichern genügt es also, dies nur für jeweils *ein* Element jeder $G$-Bahn zu tun. Die anderen Listen zu den Elementen derselben $G$-Bahn kann man dann (unter der Annahme, daß man in der Gruppe effizient multiplizieren und invertieren kann) ohne großen Aufwand on-line gemäß obiger Formel berechnen. Im Vergleich zur Abspeicherung *aller G*-invertierten Listen stellt die Abspeicherung der $G$-invertierten Listen zu den Repräsentanten der $G$-Bahnen i.a. eine enorme Speicherplatzersparnis dar. Falls $G$ auf *M' regulär* operiert, d.h. aus $gm=m$ folgt stets $g$=1, so zeigt eine Rechnung, daß die Gesamtlänge der abzuspeichernden invertierten Listen proportional zur Anzahl aller abgespeicherten Indexobjekte ist. (Die Regularität ist z.B. im obigen Musikbeispiel gegeben.) In der Praxis kann man die $G$-invertierten Listen noch weiter komprimieren, indem man verlustfreie Kompressionsmethoden zur Datenreduktion anwendet. In unseren Anwendungsbeispielen hat sich besonders die sog. Golomb-Kodierung bewährt. Einen guten Überblick über aktuelle Kompressionstechniken vermittelt etwa das Buch *Managing Gigabytes* (2.Auflage) von I.H. Witten, A. Moffat und T.C. Bell, erschienen bei Van Nostrand Reinhold, New York 1999.

Wie schon oben angedeutet, arbeitet man bei der Konstellationssuche auf der Indexebene, also mit der Menge *M'.* Da die Gruppe $G$ auf $M'$ operiert, zerfällt $M'$ disjunkt in $G$-Bahnen. Ist $R'$ ein Repräsentantensystem der $G$-Bahnen, so gilt

$$M' = \dot{\bigcup_{r \in R'}} Gr.$$

Insbesondere ist jedes Element $m$ aus $M'$ darstellbar als

$$m = g_m r_m,$$

mit eindeutig bestimmtem $r_m \in R'$ und einem Element $g_m \in G$, das nur modulo der sog. Stabilisatoruntergruppe $\{g \in G \mid g r_m = r_m\}$ eindeutig bestimmt ist.

Die zu einer angefragten Indexkonstellation $T' \subseteq M'$ gehörige *G*-Treffermenge kann man aus den abgespeicherten *G*-invertierten Listen unter Verwendung obiger Bezeichnungen wie folgt erhalten:

$$G_{P'}(T') = \cap_{m \in T'} G_{P'}(r_m) g_m^{-1}.$$

Diese Formel ist von fundamentaler Bedeutung. Sie besagt grob gesprochen, daß man die Treffermenge zu einer beliebigen Indexkonstellation *T'* erhält, indem man die zu *T'* gehörigen relevanten *G*-invertierten Listen $G_{p'}(r_m)$ zu den *G*-Bahnvertretern $r_m$ zunächst mit geeigneten Gruppenelementen $g_m^{-1}$ nachjustiert, um den Gesamtkontext der Konstellation zu berücksichtigen. Abschließend wird der mengentheoretische Durchschnitt der modifizierten Listen gebildet.

Wie aufwendig ist die Schnittmengenbildung? Zur Beantwortung dieser Frage denke man sich die Elemente $m_1,\ldots,m_s$ einer angefragten endlichen Indexkonstellation *T'* so aufgezählt, daß die zugehörigen Listenlängen $\ell_i := |G_{P'}(m_i)|$ geordnet sind: $\ell_1 \leq \ell_2 \leq \ldots \leq \ell_s$. Ferner sei $d_i$ die Kardinalität des Durchschnitts der ersten *i*-1 Listen: $d_i := |\cap_{j<i} G_{P'}(m_j)|$. Indem man mit der kürzesten Liste beginnt und jeweils den Durchschnitt mittels Binärsuche ermittelt, beträgt der Aufwand zur Bestimmung der *G*-Treffermenge $G_{p'}(T')$ größenordnungsmäßig:

$$\sum_{i=2}^{s} d_i \log \ell_i < |T'| \cdot \ell_1 \cdot \log \ell_s.$$

Gibt es viele *G*-Bahnen, so werden die einzelnen Listen verhältnismäßig klein sein. Entsprechend schnell lassen sich dann Listendurchschnitte bilden.

Als Beispiel betrachten wir eine Musikdatenbank, die 40 Millionen Noten enthält. Bei geeigneter Aufgabenstellung oder geeignetem Vorwissen des Benutzers erhalten wir ca. 2000 Listen. Im Mittel haben die Listen also nur 20 000 Einträge. Besteht die Anfrage aus *a* Noten, so haben wir demnach statt *a* mal 40 Millionen Listeneinträgen bei Verwendung einer einzelnen Liste nur im Mittel *a* mal 20000 Listeneinträge zu betrachten.

Die Vorteile des hier vorgestellten Verfahrens werden besonders deutlich, wenn man sie mit dem Stand der Technik vergleicht. Sonoda & Muraoka (vgl. eingangs) benötigen für 100 Megabyte Musikdaten einen Index der Größe 500 Megabyte, also einen Index der das etwa das 5-fache des eigentlichen Datenbestandes ausmacht. Die Erstellung dieses Index benötigt etwa 24 Stunden.

Das erfindungsgemäße Verfahren erstellt für einen Datenbestand von 330 Megabyte Musikdaten einen Index der Größe 22 Megabyte. Dies sind etwa 1/15-tel der Größe des Datenbestandes. Zur Erstellung dieses Index werden ca. 40 Sekunden auf einem Rechner benötigt, der dem von Sonoda & Muraoka von der Leistung her vergleichbar ist. Dies läßt die Indexerstellung und damit auch beliebige Konstellationssuche auf verschiedenen Datenbanken, welche noch nicht zur Suche vorbereitet, d.h. erfindungsgemäß indexiert (indiziert) sind, 'on the fly' d.h. bei entsprechender Rechenleistung in Echtzeit zu.

D.h. die Verbesserung hinsichtlich der Größe des Index beträgt nach dem erfindungsgemäßen Verfahren mehr als 75-fache (!) gegenüber dem Stand der Technik.

Hinsichtlich der Zeit, die für die Indexerstellung benötigt wird, beträgt sie gar das 2160-fache (!).

Im folgenden werden mögliche Effizienzsteigerungen und einige Ausführungsbeispiele besprochen, wobei die Effizienzsteigerungen auf der Wahl anderer Indexobjekte oder auf der Berücksichtigung des Vorwissens, das ein Benutzer besitzt basieren.

Mit Hilfe des Musikbeispiels soll hier an das allgemeine Szenario herangeführt werden. Ausgangspunkt der Musiksuche ist eine endliche Menge *P'* von Indexobjekten. Da hier momentan nur die Einsatzzeit und die Tonhöhe berücksichtigt werden, handelt es sich bei den Indexobjekten um Zahlenpaare. Mithin ist *P' eine* endliche Teilmenge von $M' := \mathbf{Z}^2$. Die additive Gruppe $G = \mathbf{Z} \times \mathbf{Z}$ operiert als Gruppe von Zeit- und Tonhöhentranslationen auf *M' und* demnach auch auf allen Konstellationen $' \subset M'$. Offenbar gibt es nur eine *G*-Bahn in *M',* nämlich ganz *M'*. Die Technik der *G*-invertierten Listen kommt hier nicht richtig zum tragen, da es nur eine Liste gibt. Um zu mehreren Bahnen zu gelangen, könnten zusätzlich Tondauern berücksichtigt werden. Geht man davon aus, daß *G* die Tondauern unverändert läßt, so gibt es hier offenbar so viele *G*-Bahnen, wie es unterschiedliche Tondauern gibt. Man kann also durch die Hinzunahme der Dauern die Effizienz der exakten Konstellationssuche steigern.

Als weitere Möglichkeit zur Effizienzsteigerung bietet sich die Berücksichtigung des Benutzervorwissens an. Das Vorwissen drückt sich mathematisch oft durch das Konzept der Untergruppe aus. Eine Teilmenge $U$ einer (multiplikativen) Gruppe $G$ heißt *Untergruppe* von $G$, wenn $U$ das neutrale Element von $G$ enthält und unter Multiplikation und Inversenbildung abgeschlossen ist. D.h. aus $x$, $y \in U$ folgt stets $xy \in U$ sowie $x^{-1} \in U$.

Angenommen, ein Benutzer weiß, daß seine Anfrage ein Stück im 4/4-tel Takt betrifft. Sein musikalisches Gefühl sagt ihm, daß seine Anfrage mit einem Auftakt beginnt. Wenn er nun weiß, daß jeder 4/4-tel Takt in Sechzehnteln quantisiert wurde, so hat er hinsichtlich der metrischen Position seiner Anfrage ein Vorwissen: er kann die Einsatzzeiten der Noten bis auf die absolute Taktnummer genau angeben. Statt $G = Z \times Z$ braucht er aufgrund seines Vorwissens nur noch die Untergruppe $U = 16\mathbf{Z} \times \mathbf{Z}$. Besitzt der Benutzer zudem ein absolutes Gehör, so wird er bei seiner Anfrage auch die Tonhöhe exakt angeben können. Statt $U$ kommt er dann mit der wesentlich kleineren Untergruppe $V = 16\mathbf{Z} \times \{0\}$ aus. Im allgemeinen gibt es, wenn man nur die 128 MIDI-Tonhöhen berücksichtigt und eine Sechzehntel-Quantisierung vornimmt, genau 128·16=2048 $V$-invertierte Listen.

Allgemein wird das Vorwissen der Benutzer beschrieben durch Untergruppen von $G$. Je größer das Vorwissen, desto kleiner ist die Untergruppe. Der Effizienzgewinn soll nun genauer beschrieben werden. Ist $U$ eine Untergruppe von $G$, so kann man analog zu den $G$-invertierten Listen $G_{p'}(m)$ auch $U$-invertierte Listen $U_{p'}(m) := \{(u,i) \mid u \in U, i \in [1:N], um \in P_i'\}$ bilden. Typischerweise sind $U$-invertierte Listen kürzer als G-invertierte Listen. Um den genaueren Zusammenhang zwischen $G$- und $U$-invertierten Listen beschreiben zu können, lasse man die Gruppe $U$ auf der Menge $G$ durch Linksmultiplikation $(u,g) \mapsto ug$ operieren. Ist $H$ *ein* Bahnenvertretersystem bzgl. dieser Operation (mit $1 \in H$), so zeigt eine leichte Rechnung, daß für alle Indexobjekte $m$ die $G$-invertierte Liste $G_{p'}(m)$ die disjunkte Vereinigung aller verschobenen $U$-invertierten Listen der Form $U_{p'}(hm)h$ ist, wobei $h$ alle Elemente von $H$ durchläuft. Der durch Berücksichtigung des Zusatzwissens erzielte Gewinn bei der Bestimmung der Treffermenge zur Indexkonstellation $T'$ wird verdeutlicht durch die Tatsache, daß $G_{p'}(T')$ die disjunkte Vereinigung aller Listen $U_{p'}(hT')h$ zu $h \in H$ ist. Aufgrund des Vorwissens ist hier nur die Liste zu $h$=1, also $U_{p'}(T')$, von Interesse.

Ein geometrisches Beispiel soll das obige weiter illustrieren. Bei der Konstellationssuche in Landkarten spielt es bei der Suche eine wesentliche Rolle, ob aus den Karten und aus der Anfrage hervorgeht, wo Norden ist. Liegt dieses Vorwissen stets vor, so kann man sich Drehungen der Anfrage ersparen und kommt allein mit Translationen aus.

Neben der Zeiteffizienz spielt naturgemäß hier auch die Effizienz hinsichtlich des Speicherplatzbedarfs eine wichtige Rolle. Durch eine leichte Modifikation kann man es in vielen Anwendungen erreichen, daß man ohne Einschränkung von nur *einem* Dokument ausgehen kann. Das spart dann das ständige Mitführen des zweiten Parameters $i$ in $(g,i)$. Bei den Musikstücken erreicht man dies durch "Hintereinanderhängen" der Musikstücke, indem man die Einsatzzeiten entsprechend modifiziert und in einer gesonderten Tabelle ablegt, zu welcher Einsatzzeit ein neues Dokument beginnt. Im Fall höherdimensionaler Indexobjekte arbeitet man entsprechend mit höherdimensionalem Aneinanderhängen.

Weitere Varianten des erfindungsgemäßen Verfahrens erlauben die effiziente fehlertolerante Konstellationssuche. Bei der ersten Variante geht es um die Berücksichtigung von bis zu $k$ Fehlstellen (Mismatches). Genauer handelt es sich hier um folgendes: Es sei $T'$ eine angefragte Indexkonstellation, die aus irgendwelchen Gründen (Tippfehler, mangelndes Wissen) nicht mit der intendierten Indexkonstellation übereinstimmt. Wenn man nun eine (vorzugsweise kleine) Menge $F$, $F \subset T'$, von Fehlstellen zuläßt und $T'$ *um* die Elemente aus $F$ zur Menge $T' \setminus F$ verkleinert, kann man ggf. den eigentlich gesuchten Treffer $(g,i)$ über die Teilkonstellation $g(T' \setminus F)$ von $P'_i$ finden. Läßt man bis zu $k$ Fehlstellen zu, $k \geq 0$, so interessiert man sich für die Menge $G_p{}^k(T')$, die aus allen Paaren $(g,i)$ besteht, zu denen es eine höchstens $k$-elementige Teilmenge $F$ von $T'$ *gibt,* so daß $g(T' \setminus F)$ Teilmenge von $P_i'$, ist.

Zur effizienten Berechnung von $G_p{}^k(T')$ denkt man sich die Elemente von $T'$ *in* irgendeiner Reihenfolge aufgelistet: $T' = \{m_1, ..., m_\ell\}$. Wird die zu $m_j$ gehörige $G$-invertierte Liste $G_{p'}(m_j)$ abkürzend mit $G_j$ bezeichnet, so wählt man vorzugsweise die Auflistung so, daß die Listenlängen in aufsteigender Größe geordnet sind. Weiter bezeichne $V_j := G_1 \cup ... \cup G_j$ die Vereinigung der ersten $j$ Listen. Induktiv werden nun Funktionen $K_1, ..., K_\ell$ definiert. Die Funktion $K_j$ ordnet jeden Element aus $V_j$ eindeutig eine Zahl zwischen Null und $k$+1 zu. Grob gesprochen beschreiben diese Funktionen, welche Paare $(g,i)$ noch wieviel "Kredit" haben. Wie sich zeigen läßt, bilden die Elemente $(g,i)$ aus $V_\ell$ mit positivem Kredit, d.h. $K_\ell(g,i) > 0$, genau die Elemente von $G_p{}^k(T')$. Die Kreditfunktionen sind wie folgt definiert. $K_1$ ist konstant gleich $k$+1 für alle Elemente von $V_1$. Sind schon $K_1, ..., K_{j-1}$ definiert und liegt $(g,i)$ in $V_j$, so unterscheidet man zur Definition von $K_j(g,i)$ drei Fälle: 1. Fall: $(g,i)$ liegt sowohl in $V_{j-1}$ als auch in $G_j$. Hier wird $K_j(g,i) = K_{j-1}(g,i)$ gesetzt. Im zweiten Fall, wenn $(g,i)$ in $V_{j-1}$ aber nicht in $G_j$ liegt, wird $K_j(g,i)=K_{j-1}(g,i)-1$ gesetzt. Schließlich wird im dritten Fall, wo $(g,i)$ in $G_j$ aber nicht in $V_{j-1}$ liegt $K_j(g,i) = k + 2 - j$ gesetzt. $K_j(g,i) = k + 1 - (j - d)$ bedeutet, daß $(g,i)$ in genau $d$ der Mengen $G_1, ..., G_j$ vorkommt. Also besteht die gesuchte Liste $G_p{}^k(T')$ aller $G$-Treffer von $T'$ in $P'$ mit bis zu $k$ Mismatches gerade aus den Elementen aus $V_\ell$, an denen die Kreditfunktion $K_\ell$ positiv ist.

Um $K_j$ aus $K_{j-1}$ zu berechnen braucht man nur für jedes $(g,i) \in G_j$ zu testen, ob $(g,i)$ in $V_{j-1}$ liegt. Der Gesamtaufwand zur Berechnung von $K_1, ... , K_\ell$ ergibt sich aus $|G_1| + ... + |G_\ell|$ vielen Tests und aus bis zu $|G_1| + ... + |G_\ell|$ vielen einfachen Manipulationen von Funktionswerten.

Eine zweite Variante zur fehlertoleranten Konstellationssuche erlaubt die effiziente Behandlung unscharfer Konstellationsanfragen. Eine Fuzzy-Konstellation **F** auf der Grundlage einer Indexkonstellation $T'$ stellt für jedes Element $t$ von $T'$ eine sogenannte Komponentenmenge $\mathbf{F}_t \subseteq M'$ *bereit,* wobei die Elemente aus $\mathbf{F}_t$ alle Möglichkeiten (inklusive $t$ selbst) abdecken, die für $t$ alternativ noch in Betracht kommen. Die Größe dieser Komponentenmengen $\mathbf{F}_t$ sowie die Lage der Elemente spiegeln in gewisser Weise die Unschärfe der angefragten Konstellation an der "Stelle" $t \in T'$ wider. Ist man sich für bestimmte $t \in T'$ sicher, daß wirklich nur $t$ in Frage kommt, so kann man $\mathbf{F}_t = \{t\}$setzen. An dieser Stelle ist die Anfrage dann scharf. Eine Fuzzy-Indexkonstellation **F** definiert also eine ganze Menge $\Pi(\mathbf{F})$ von Suchkonstellationen. Diese ergeben sich, indem man aus jeder Komponentenmenge $\mathbf{F}_t$ jeweils ein beliebiges Element nimmt. Die zu **F** gehörige Treffermenge $G_{p'}(\mathbf{F})$ besteht daher aus allen Paaren $(g,i)$, für die es eine Indexkonstellation $B$ in der Menge $\Pi(\mathbf{F})$ gibt, so daß $gB$ Teilmenge von $P_i'$ ist. Analog zur exakten Konstellationssuche ergibt sich die zur angefragten Fuzzy-Indexkonstellation **F** gehörige Treffermenge $G_{p'}(\mathbf{F})$, indem man zunächst für jedes $t \in T'$ die $G$-invertierten Listen zu allen Elementen von $\mathbf{F}_t$ vereinigt und anschließend über alle $t \in T'$ die Durchschnitte all dieser vereinigten Listen bildet. Bei der Vereinigungsbildung ist wieder aus Gründen der Speichereffizienz zu berücksichtigen, daß $G_{p'}(m) = G_{p'}(r_m)g_m^{-1}$ ist. Man beachte, daß der Aufwand für eine Fuzzy-Anfrage proportional zur Summe und nicht etwa proportional zum Produkt der Elementanzahlen $|\mathbf{F}_t|$ der Komponentenmengen ist.

Eine dritte Variante arbeitet neben der Fuzzy-Anfrage **F** zusätzlich mit einer Gewichtung. Vorzugsweise geht man von einer Wahrscheinlichkeitsverteilung $p$ auf der Menge $\Pi$(F) aller Indexkonstellationen zu **F** aus. Ein solches $p$ ordnet jedem Element $B$ aus $\Pi(\mathbf{F})$ eine zwischen Null und Eins liegende Zahl $p(B)$ zu. Diese Gewichte haben sich zu Eins aufzusummieren. Mittels $p$ besteht die Möglichkeit einer gewichteten Fuzzy-Konstellationssuche. Dazu führen wir die *p-Trefferliste* $G_{P'}(\mathbf{F},p)$ zur angefragten Fuzzy-Indexkonstellation **F** ein. Diese besteht aus allen Tripeln $(g,i,\pi)$ mit $g \in G$, $i \in [1:N]$ und der Wahrscheinlichkeit $\pi$ für das Ereignis, daß ein $B$ aus $\Pi(\mathbf{F})$ durch $g$ nach $P_i'$ transportiert wird. Die Berücksichtigung einer Wahrscheinlichkeitsverteilung $p$ auf $\Pi(\mathbf{F})$ ermöglicht mittels $\pi$ ein Ranking auf $G_{p'}(\mathbf{F},p)$.

Eine vierte Variante erlaubt die effiziente Behandlung von Fuzzy-Anfragen mit bis zu $k$ Fehlstellen. Zur genaueren Beschreibung sei wieder $T' = \{m_1, ..., m_\ell\}$ und **F** eine angefragte Fuzzy-Konstellation mit $\mathbf{F}_t \subseteq M'$ für $t \in T'$. Für $j = 1, ..., \ell$ setzt man abkürzend $\mathbf{F}_j := \mathbf{F}_{m_j}$; ferner sei $G_j$ die mengentheoretische Vereinigung aller $G$-invertierten Listen zu allen $m \in \mathbf{F}_j$ und $V_j$ bezeichne die Vereinigung aller $G_1, ..., G_j$.

Die Menge $G_{p'}^k(\mathbf{F})$ der $G$-Treffer zur Fuzzy-Indexkonstellation **F** mit bis zu $k$ Fehlstellen ist die Menge aller Paare $(g,i)$, so daß ein $B \in \Pi(\mathbf{F})$ sowie eine höchstens $k$-elementige Teilmenge $F$ von $T'$ existiert, so daß die zu $T' \setminus F$ korrespondierenden Elemente von $B$ durch $g$ ganz nach $P_{i'}$ transportiert werden. Indem man wie in der ersten Variante Kreditfunktionen $K_1, ..., K_\ell$ induktiv und wörtlich wie oben (allerdings jetzt mit modifizierten Mengen $G_j$ und $V_j$) definiert und entsprechend berechnet, erhält man die gesuchte Treffermenge $G_{p'}^k(\mathbf{F})$ als Menge derjenigen Elemente $(g,i)$ aus $V_\ell$, an denen $K_\ell$ positiv ist.

Bei der fünften Variante kann man bei Fuzzy-Konstellationsanfragen auch im gewichteten Fall bis zu $k$ Fehlstellen zulassen. In diesem Fall geht man von der modifizierten Menge $\Pi_k(\mathbf{F})$ aus, die aus allen Indexkonstellationen $B'$ besteht, wobei sich $B'$ aus einem $B \in \Pi(\mathbf{F})$ durch Weglassen von bis zu $k$ Indexobjekten ergibt. Ist nun auf $\Pi_k(\mathbf{F})$ eine Wahrscheinlichkeitsverteilung $p_k$ gegeben, so interessiert jetzt die Menge $G_{p'}^k(\mathbf{F},p_k)$, die aus allen Tripeln $(g,i,\pi)$ besteht, wobei $\pi$ die Wahrscheinlichkeit des Ereignisses ist, daß ein $B' \in \Pi_k(\mathbf{F})$ durch das Gruppenelement $g$ ganz nach $P_i$, transportiert wird.

Ist schon auf $\Pi(\mathbf{F})$ eine Wahrscheinlichkeitsverteilung $p$ vorgegeben und ist $q$ eine Wahrscheinlichkeitsverteilung auf der Menge aller höchstens $k$-elementigen Teilmengen von $T'$, so erhält man eine Wahrscheinlichkeitsverteilung $p_k$ auf $\Pi_k(\mathbf{F})$ durch $P_k(B') := p_s(B') \cdot q(T' \setminus S)$, wobei $S$ den Definitionsbereich von $B'$ bezeichnet und $p_s$ die zu $p$ gehörige Marginalverteilung auf $\Pi_{t \in S} \mathbf{F}_t$ ist, d.h. $p_s(B')$ ist die Wahrscheinlichkeit des Ereignisses, daß die Einschränkung von $B$ auf $S$ gleich $B'$ ist.

Die weiter oben beschriebene Möglichkeit des Arbeitens mit verteilten Indexen soll hier am Beispiel der Konstellationssuche in Musikdokumenten genauer erläutert werden. Läßt man bei der Suche in Musikdokumenten als Treffer auch tonhöhenverschobene Varianten der Anfrage zu, so bewerkstelligt ein erstes Verfahren diese Suche, indem es die ursprüngliche Anfrage durch alle transponierten Versionen ersetzt und jede Version einzeln anfragt. Da es beim MIDI-Standard 128 Tonhöhen gibt, hat man es im schlimmsten Fall dann statt mit einer Anfrage mit 128 Anfragen zu tun.

Ein bevorzugtes Verfahren kommt mit nur 16 Anfragen an verschiedene kleinere Indexe aus. Dieses Verfahren basiert auf der sogenannten Chinesischen Restetechnik, die im folgenden erläutert wird.

Zunächst beachte man, dass man zwar nur die Tonhöhen 0,1,...,127 zur Verfügung hat, aber aus Bequemlichkeit mit ganz **Z** gearbeitet wurde. Genauso gut könnten man nur mit der Menge [0:127] arbeiten. Aus Gründen, die gleich näher erläutert werden, benutzt man das etwas größere Intervall [0:139] zur Beschreibung der 128 verschiedenen Tonhöhen. In diesem Zusammenhang haben die Werte 128,...,139 keine Interpretation als Tonhöhen.

Für eine beliebige ganze Zahl $n \geq 2$ bezeichne $\mathbf{Z}/n\mathbf{Z}$ das Intervall $[0:n-1]$, in dem Addition und Multiplikation modulo $n$ durchgeführt werden. D.h. zwei Zahlen aus dem Intervall werden addiert bzw. multipliziert, indem man zunächst die gewöhnliche Addition bzw. Multiplikation von Zahlen durchführt und das Ergebnis so um geeignete Vielfache von $n$ abändert, daß das Resultat dann im Intervall $[0:n-1]$ liegt. Das Resultat der Addition bzw. Multiplikation der Zahlen

$x$ und y modulo $n$ wird mit $x+y$ mod $n$ bzw. $xy$ mod $n$ bezeichnet. Z.B. ist 7+5 mod 10 = 2, denn 7+5-10=2 und 2 liegt im Intervall [0:9]. Entsprechend ist 7·5 mod 10 = 5, denn 7·5-3·10=5.

Der klassische Chinesische Restesatz besagt nun, daß für eine Folge $n_1,...,n_r$ von paarweise teilerfremden ganzen Zahlen $n_i \geq 2$, deren Produkt mit $n$ bezeichnet werde, zwischen den Zahlbereichen $\mathbf{Z}/n\mathbf{Z}$ und $\mathbf{Z}/n_1\mathbf{Z}$ x ... x $\mathbf{Z}/n_r\mathbf{Z}$ durch $\Phi(m) := (m \bmod n_1, \ldots, m \bmod n_r)$ ein Isomorphismus gegeben ist, das heißt hier: $\Phi$ ist eine umkehrbar eindeutige Abbildung und $\Phi$ vertauscht mit der Addition und Multiplikation: $\Phi(m_1+m_2) = \Phi(m_1) + \Phi(m_2)$, $\Phi(m_1 \cdot m_2) = \Phi(m_1)\cdot\Phi(m_2)$, wobei Addition und Multiplikation auf der rechten Seite komponentenweise zu verstehen sind.

In der hier vorliegenden speziellen Situation nimmt man $n_1$=4, $n_2$=5 und $n_3$=7 und erhält

$$Z/140Z \simeq Z/4Z \times Z/5Z \times Z/7Z.$$

Man generiert statt eines Indexes jetzt drei Indexe: $I_4$, $I_5$ und $I_7$, indem man die Original-Tonhöhen modulo dem jeweiligen Index nimmt. Die so entstehenden Indexe sind einzeln natürlich kleiner als der ursprüngliche Index. Genauer hat sich gezeigt, dass die drei Indexe zusammen weniger als doppelt so groß wie der ursprüngliche Index sind, im hier vorliegenden Fall statt 22 MB etwa 37 MB Speicher erfordern.

Ist $Q$ eine angefragte Notenkonstellation, so bezeichne $M^t(Q)$ die Menge aller Treffer von transponierten Versionen von $Q$ in der Datenbank. Zur transpositionsinvarianten Anfragebeantwortung werden nun die Tonhöhen in der Anfrage $Q$ modulo der jeweiligen Zahl genommen. Die resultierenden (modularen) Anfragen bezeichnet man mit $Q_4$, $Q_5$ und $Q_7$. Nun beachte man, daß man in den modularen Welten nur sehr beschränkt verschiedene Translationen durch führen kann. Genauer gibt es in $\mathbf{Z}/n_i\mathbf{Z}$ genau $n_i$ verschiedene Translationen, so daß es insgesamt hier nur 4+5+7=16 (parallel ausführbare) Anfragen an die drei Indexe gibt. Aus den zu den jeweiligen Moduli $n_i$ und zur Translation $\tau_i$, $0 \leq \tau_i < n_i$, entstehenden Treffermengen $M_{n_i,\tau_i}(Q_{ni})$ muß abschließend noch die Gesamttreffermenge $M^t(Q)$ bestimmt werden. Dies geschieht, indem man die 128 Kombinationen $M_\tau := M_{4,\tau 4}(Q_4) \cap M_{5,\tau 5}(Q_5) \cap M_{7,\tau 7}(Q_7)$, mit $\tau := (\tau_4, \tau_5, \tau_7)$, $0 \leq \tau_i < n_i$, mittels dynamischer Programmierung schnell berechnet. Man beachte, daß jetzt zwar wie bei der brute force Methode wieder 128 Operationen durchzuführen sind, diesmal aber auf viel kleineren (provisorischen) Lösungsmengen. Insgesamt ist $M^t(Q)$ die Vereinigung aller $M_\tau$.

Zahlreiche Vorteile der Erfindung können anhand der speziellen Anwendung zur Konstellationssuche in polyphonen Musikstücken beschrieben werden.

Es ist aus dem Stand der Technik kein Verfahren bekannt, das für den allgemeinen Fall eine polyphone Suche in polyphonen Musikstücken erlaubt. Das erfindungsgemäße Verfahren gemäß obigem Ausführungsbeispiel erlaubt diese Art der Suche. Insbesondere ist die mengenorientierte Arbeitsweise des erfindungsgemäßen Verfahrens von Vorteil, um in einer Anfrage möglicherweise nur gewisse Teile oder Fragmente, die dem Anfragenden bekannt sind, spezifizieren zu können. Alle unbekannten Teile, die sich zeitlich oder bezüglich der Tonhöhe zwischen bekannten Teilen befinden, brauchen nicht gesondert berücksichtigt zu werden. Diese Problematik stellt eine besondere Schwierigkeit bei zeichenkettenbasierten Ansätzen nach dem Stand der Technik dar, die bisher nicht zufriedenstellend gelöst werden konnte.

Neben den Vorteilen, bestimmte Probleme mit dem erfindungsgemäßen Verfahren überhaupt erst effektiv lösen zu können, sind bezüglich der Laufzeit für Suchanfragen und des Speicherbedarfs zur Verwaltung des Indexes sehr effiziente Realisierungen des erfindungsgemäßen Verfahrens möglich.

Von Vorteil für die effiziente Suche ist insbesondere die Tatsache, daß die Teiltreffermenge eines Indexobjektes effizient aus der Teiltreffermenge seines Repräsentanten innerhalb des Index, d.h. aus den Transformationen innerhalb eines Indexeintrags, bestimmt werden kann.

Ausführungen des Verfahrens zur Indexierung (Indizierung) und Suche ergeben sehr schnelle Laufzeiten auf einem Datenbestand von ca. 12.000 klassischen Musikstücken mit insgesamt ca. 33 Millionen Noten. Verfahren nach dem Stand der Technik zu monophonen Musikstücken verarbeiten im Vergleich hierzu höchstens einige Zehntausend Noten. Die durchschnittliche Antwortzeit zu einer Datenbankanfrage bestehend aus 10 Noten bzw. Indexobjekten auf einem Pentium II Digitalrechner mit 333 MHz Systemtakt, 256 MB Speicherkapazität und Betriebssystem MS Windows NT 4.0 beträgt 87 Millisekunden (100 Millisekunden bei 20 Noten, 159 Millisekunden bei 100 Noten). Die Größe des Indexes kann unter Verwendung invertierter Listen in Kombination mit einer Variante der Golomb-Codierung nochmals stark reduziert werden.

In der oben skizzierten Realisierung des Verfahrens reduziert die Codierungstechnik den unkomprimierten Index von ca. 330 MB Größe auf 22 MB Größe. Dies ist von wesentlichem Vorteil, da eine solche Reduktion oftmals ausschlaggebend dafür ist, daß der Index vollständig im Hauptspeicher des Digitalrechners abgelegt werden kann. Dies ist wiederum ein wesentliches Kriterium für einen schnellen Zugriff auf den Index.

Ein wesentlicher Vorteil eines Indexes entsprechend dem erfindungsgemäßen Verfahren liegt in der Tatsache, daß die Anzahl der Indexeinträge nur abhängig vom Typ der Daten und nicht vom Datenbestand selbst ist. Dies bedeutet, daß die Anzahl der Indexeinträge unabhängig vom Datenbestand a priori bekannt ist. Dies ist etwa anders als in Stichwortverzeichnissen von Büchern oder anderen Textdokumenten, bei denen die Anzahl der Indexeinträge potentiell beliebig groß werden kann und vom jeweiligen Textdokument abhängig ist. Verfahren entsprechend der vorliegenden Erfindung erlauben vielmehr durch eine geeignete Wahl von Transformationen im voraus eine Anpassung der Anzahl der Indexeinträge gemäß dem Typ der Datenobjekte.

Es zeigt sich, daß der Aufbau von Indexstrukturen mit dem erfindungsgemäßen Verfahren sehr schnell zu bewerkstelligen ist. Dies ist von Vorteil, da somit, gemäß einem bestimmten Vorwissen eines Anfragenden, in einem Vorverarbeitungsschritt vor der eigentlichen Anfrage die gesamte Indexstruktur entsprechend diesem Vorwissen aufgebaut werden kann. Bei Verfahren nach dem Stand der Technik stellt die Indexerstellung häufig einen sehr langwierigen Prozeß dar, der dem Anfragenden unzumutbare Wartezeiten abverlangt.

Vorteilhaft ist weiterhin die Verwendung des erfindungsgemäßen Verfahrens in einer Ausführungsform zur Durchführung einer unscharfen Suche. Dies erlaubt im Anwendungsfall Musiksuche erstmals eine universelle Spezifikation des Begriffes der unscharfen Anfrage. Insbesondere ist die Unschärfe lokal einstellbar und kann damit an eventuell unterschiedliches Vorwissen bezüglich der einzelnen Teile der Anfrage angepaßt werden. Ein besonderer Vorteil dieser Art der unscharfen Suche ist die Möglichkeit zur schnellen Bestimmung der Treffermenge.

Die effiziente Durchführung der unscharfen Suche (Konstellationssuche) ermöglicht die Bestimmung der gesamten Treffermenge mit einem Zeitaufwand in einer Größenordnung abhängig von der Summe der Elemente der Komponentenmengen, obwohl eine unscharfe Anfrage gleichzeitig soviele Anfragen kombiniert, wie es dem Produkt aus der Anzahl der Elemente der Komponentenmengen entspricht. In einem Beispiel seien N paarweise disjunkte, jeweils zweielementige Komponentenmengen gegeben. Die unscharfe Suchkonstellation besteht somit aus 2N Indexobjekten, und die unscharfe Suche kann mit einer entsprechenden Zeitkomplexität (vgl. obige Laufzeitbetrachtungen) ausgeführt werden. Andererseits beschreibt die unscharfe Suchkonstellation aber $2^N$, also exponentiell viele herkömmliche Suchkonstellationen.

Vorteilhaft ist weiterhin die Erstellung eines Rankings oder einer Treffermenge zu einer bestimmten (maximalen) Fehleranzahl, die die Anzahl der Indexobjekte angibt, um die die Suchkonstellation von einer (Treffer-) Konstellation im Datenbestand der Datenbank (maximal) abweicht. Die Berechnungen hierzu können ebenfalls sehr effizient durchgeführt werden, etwa mit Methoden der dynamischen Programmierung.

Zur Bestimmung der Treffermenge ist es notwendig, aus den für alle Indexobjekte der Suchkonstellation im jeweilig vorstehend beschriebenen Schritt (1) bestimmten Untermengen anhand einer vorgegebenen Fehleranzahl genau diejenigen Transformationsabbildungen zu bestimmen, die in genau sovielen der Mengen nicht vorkommen, wie die vorgegebene Fehleranzahl angibt.

In einer Variante dieses Verfahrens kann für jede Fehleranzahl einer Menge möglicher Fehleranzahlen jeweils eine Treffermenge bestimmt werden. Aus den Treffermengen kann weiterhin durch Ordnung gemäß der Fehleranzahlen der Treffer eine Reihenfolge der Treffer, bzw. ein Ranking (eine Rangliste), erstellt werden.

Die Verwendung der unscharfen Anfrage ermöglicht in diesem Zusammenhang durch den Mechanismus eine Gewichtung der Komponentensuchkonstellationen zu spezifizieren, und daraus eine gewichtete Sortierung der Treffermenge erzeugen zu können, eine weitere Form eines Rankings.

Die Möglichkeit, Vorwissen in den Anfrage- bzw. Indexierungsmechanismus einbeziehen zu können, stellt einen weiteren Vorteil des erfindungsgemäßen Verfahrens dar. Beispielsweise wird im Falle der Anwendung zur Musiksuche ein Experte auf dem Gebiet der Musikwissenschaft in vielen Fällen ein Vorwissen über die metrische Position zu seiner Musikanfrage haben. Dies wird von der Art der Indexerstellung besonders unterstützt, indem nur solche Treffer resultieren, die auch tatsächlich mit dem spezifizierten Vorwissen, im Falle der Musiksuche also z.B. mit der angefragten metrische Position, übereinstimmen. Stellt andererseits ein musikalischer Laie die Musikanfrage, so wird in vielen Fällen eine Verwendung der Indexstruktur anderer Art erwünscht sein. Nämlich eine Indexstruktur, die kein Vorwissen über die metrische Position der Musikanfrage verlangt und daher Treffer unabhängig von dieser Position liefert. Der daraus für den Anfragenden entstehende Nachteil ist eine eventuell zu große Treffermenge.

Ein weiterer Vorteil des Verfahrens erwächst aus der Verallgemeinerung und Erweiterung des gerade diskutierten Vorgehens, bei dem eine Anfrage auf verschiedenen Detailstufen möglich ist. Ähnlich hierzu ist es möglich, eine hierarchische Indexierungsstruktur aufzubauen, so daß Vorwissen sowohl von verschiedener Qualität als auch von verschiedener Quantität eingebracht werden kann. So etwa hat ein erster Anfragender mehr Vorwissen über Tonarten als über Einsatzzeiten. Ein zweiter Anfragender verfügt gleichermaßen über Vorwissen bzgl. Tonarten und Einsatzzeiten, kennt sich dabei jedoch im Bereich Einsatzzeiten besser aus. Die Verwendung einer geeigneten Hierarchie von Transformationsabbildungen schafft so die Möglichkeit einer hierarchischen Klasseneinteilung und somit die Möglichkeit zum Aufbau eines hierarchischen Indexes.

Von Vorteil ist weiterhin, daß das erfindungsgemäße Verfahren im Vergleich zu Verfahren nach dem Stand der Technik auch völlig neuartige Anfragemöglichkeiten erlaubt. Hier ist insbesondere die mengenorientierte Anfrageart zu nennen, aber auch die implizite Möglichkeit zur Einbringung von Vorwissen. Das erfindungsgemäße Verfahren benötigt weiterhin keine Ähnlichkeitsmaße wie Verfahren nach dem Stand der Technik. Es wird lediglich vorausgesetzt, daß für je zwei Objekte entschieden werden kann, ob sie als gleichwertig anzusehen sind. Die eigentliche Ähnlichkeit kann bei Anfragen vom Benutzer selbst eingestellt werden. Dies geschieht beispielsweise durch die im erfindungsgemäßen Verfahren verwendeten Komponentenmengen der unscharfen Anfrageart, oder durch die explizite Angabe einer maximal erlaubten Fehleranzahl oder Fehlerrate in Prozent. Bei Vorlage einer Metrik im mathematischen Sinne können auch für das erfindungsgemäße Verfahren, durch Angabe passender Komponentenmengen, entsprechende Anfragen realisiert werden. Ein entscheidender Vorteil des erfindungsgemäßen Verfahrens liegt also darin, daß es auch dort Anwendung finden kann, wo der Begriff der Ähnlichkeit nicht in Form einer Metrik vorliegt bzw. wo die Ähnlichkeit bislang nur unzureichend geklärt worden ist. Dies ist beispielsweise bei dem Vergleich zweier Melodien im musikalischen Sinne der Fall.

Das erfindungsgemäße Verfahren besitzt, zusätzlich zu der oben bereits ausführlich beschriebenen Verwendung zur polyphonen Suche in polyhonen Musikstücken, zahlreiche weitere Anwendungsgebiete.

Das Verfahren ermöglicht allgemein eine Konstellationssuche mit den bereits oben beschriebenen Vorteilen. Durch seine Eigenschaften sind Anwendungsgebiete insbesondere im Bereich Konstellationssuche in höherdimensionalen Datenbeständen zu sehen, die durch eine in gewisser Weise dünnbesetzte Struktur gekennzeichnet sind. Dies bedeutet, daß der Datenbestand aus Indexobjekten innerhalb des Universums aller möglicher Indexobjekte einen relativ kleinen Anteil besitzt. Beispielsweise kommen in einem Musikstück bei einer relativ feinen Unterteilung der quantisierten Einsatzzeiten immer nur wenige Noten bzw. Tonhöhen pro Einsatzzeit vor. Beispiele für solche Anwendungsfälle sind durch die einleitend beschriebene Suche von Gebäudekonstellationen in Landkarten und durch die Suche nach Konstellationen von Spielfiguren in Datenbanken zur Archivierung von Spielabläufen von (Gesellschafts-) Spielen gegeben. Ein Beispiel wäre hier eine Datenbank zur Archivierung von Schachpartien. Verwendet man geeignete Vorverarbeitungsmethoden, erschließt sich als sehr breites Anwendungsfeld die exakte oder, was meist der Fall ist, approximative Suche in digitalen audiovisuellen Dokumenten. Die Aufgabe einer Vorverarbeitungsmethode ist dabei, aus den jeweiligen Dokumenten in geeigneter Weise Datenobjekte zu erzeugen, die dann einer Verarbeitung im Sinne des erfindungsgemäßen Verfahrens zugänglich sind. Als erstes Anwendungsbeispiel hierfür seien digitale Audiosignale genannt. Der Vorverarbeitungsschritt besteht in diesem Beispiel darin, jedes Audiosignal der Datenbank mit Hilfe einer gefensterten Fouriertransformation in eine Zeit-Frequenz-Darstellung zu überführen. Es resultiert aus Sicht der Signalverarbeitung für jedes Audiosignal ein zweidimensionales Gitter von Daten, wobei die Dimensionen einerseits durch eine Zeit- andererseits durch eine Frequenzachse gekennzeichnet sind. Zu jedem Punkt dieses Gitters wird durch die gefensterte Fouriertransformation ein Amplitudenwert bestimmt. Für die Sichtweise innerhalb des erfindungsgemäßen Verfahrens ist es günstiger, in diesem Falle drei Dimensionen zu betrachten. Die Datenobjekte sollen in diesem Beispiel daher so gewählt sein, daß die Nutzdaten aus einer Zeit-, einer Frequenz- und einer Amplitudenkoordinate bestehen. Somit können aus den Transformationswerten der gefensterten Fouriertransformation Datenobjekte gebildet werden, indem jedem Zeit-Frequenz-Punkt des Gitters ein Datenobjekt, bestehend aus der jeweiligen Zeit- und Frequenzkoordinate sowie dem zugehörigen Amplitudenwert zugeordnet wird. Die Überführung in Indexobjekte kann dann beispielsweise so erfolgen, daß die einzelnen Koordinaten geeignet vergröbert werden. Im vorliegenden Beispiel kann hierzu der Amplitudenwert auf ein Gitter von sehr wenigen möglichen Lautstärkewerten vergröbert werden. Weiterhin kann die Menge der betrachteten Frequenzen durch eine Einteilung der Frequenzachse in Frequenzgruppen reduziert werden. Hierzu kann für jede Frequenzgruppe, etwa durch Mittelwertbildung aller Amplitudenwerte einer Frequenzgruppe, ein gemeinsamer Amplitudenwert bestimmt werden. Um die Indexobjekte robust gegenüber globalen Lautstärkeänderungen des Audiosignals zu machen, können in einer Variante des Verfahrens anstelle der absoluten Amplitudenwerte vielmehr relative Amplitudenwerte, bestimmt etwa als Quotienten benachbarter absoluter Amplitudenwerte, verwendet werden. Die hier verwendete Wahl der Indexobjekte ist weiterhin von Vorteil bei der Konstellationssuche unabhängig von der Frequenzbandbreite der betrachteten Audiosignale. Hierzu können je nach Bandbreite des der Suchkonstellation zugrundeliegenden Audiosignals nur bestimmte, unteren Frequenzgruppen zugeordnete, Indexobjekte in die Suche einbezogen werden. Suchkonstellationen werden in diesem Beispiel analog unter Verwendung der Vorverarbeitungsmethode aus Audiosignalen oder zeitlichen Ausschnitten von Audiosignalen gebildet. Die Verwaltung aller vorhandenen Audiosignale innerhalb eines gemeinsamen Dokumentes kann wie vorstehend beschrieben durch zeitliches Hintereinanderhängen innerhalb eines weiteren Vorverarbeitungsschritts erfolgen.

Als weiteres Anwendungsgebiet sei die Konstellationssuche in Bilddatenbanken genannt. Im Vorverarbeitungsschritt werden mit Hilfe einer Extraktionsvorschrift markante Aspekte aus jedem Bild der Datenbank extrahiert. Jedem der Aspekte wird ein Datenobjekt zugeordnet. In einem Beispiel sind die Aspekte durch Kanten einer bestimmten Stärke gegeben. Zu den Nutzdaten eines Datenobjekts könnten in diesem Fall die Position der Kante im Bild und die Kantenstärke gehören. Indexobjekte können wiederum mit Hilfe einer geeigneten Vergröberungsvorschrift bestimmt werden. Bei der Konstellationssuche in Bilddaten ist es oft wünschenswert, geometrische Transformationen der Suchkonstellation zuzulassen. Beispiele solcher geometrischer Transformationen sind Translation, Drehung um einen bestimmten Punkt, Skalierung und Spiegelung. Zur Indexerstellung werden dann Klassen aus denjenigen Indexobjekten gebildet, die unter bestimmten geometrischen Transformationen, z.B. Rotation und Skalierung, ineinander überführt werden. Bei der Konstellationssuche wird in diesem Fall ein Treffer erzielt, falls die Suchkonstellation durch eine Kombination der verwendeten geometrischen Transformationen in den Datenbestand der Indexobjekte überführt wird. Neben geometrischen Transformationen können auch andere Transformationen verwendet werden.

Als drittes Anwendungsbeispiel sei die automatische Suche nach Plagiaten oder Kopien von audiovisuellen Dokumenten oder Teilen hiervon genannt. Dies hat insbesondere Anwendungen bei der Feststellung von Urheberrechtsverletzungen. Das erfindungsgemäße Verfahren kann dabei in verschiedenen Ausprägungen verwendet werden, beispielsweise zur exakten Suche. Vergröbernd kann eine Vorverarbeitung, wie im ersten oder zweiten obigen Beipiel beschrieben, angewendet werden. Das erfindungsgemäße Verfahren ist insbesondere von Vorteil, da bei dieser Art der (exakten) Suche das Datenaufkommen immens und mit den Verfahren nach dem Stand der Technik nicht in akzeptabler Zeit handhabbar ist. Als Beispiele für audiovisuelle Dokumente sind nicht nur die klassischen digitalen audiovisuellen Datenformate (wie PCM, DEC, WAV oder MIDI), sondern auch neuere Datenformate zur Verwaltung komprimiert vorliegenden Datenmaterials zu nennen (wie JPG, MPG oder MP3). Aus der allgemeinen Wahlmöglichkeit der Transformationsabbildungen erwächst zusätzlich ein breites Anwendungsspektrum. Da als Mengen von Transformationsabbildungen auch alle Gruppen im mathematischen Sinne wählbar sind, ist hier eine extrem große Anzahl möglicher Mengen von Transformationsabbildungen gegeben. Beispielsweise können durch solche Gruppenoperationen die obigen geometrischen Bewegungen der Suchkonstellation oder beliebige Kombinationen hiervon beschrieben werden.

Weiterhin läßt sich das vorliegende erfindungsgemäße Konstellationssuchverfahren zur schnellen Volltextsuche verwenden; dies insbesondere für Suchanfragen, die sich mittels herkömmlicher Suchmethoden nicht effizient beantworten lassen. Etwa Anfragen der Form (geschrieben in Pattern Matching Schreibweise): A*B, A###B oder auch A#B*B###A, mit A und B fest, sowie * als variablem Platzhalter und # als Positionsplatzhalter.

Durch die vorliegende Erfindung in all ihren Ausführungsformen kann ein Datenverarbeitungssystem durch entsprechende Mittel, vorzugsweise durch Softwaremodule jeweils so eingerichtet werden, daß es erfindungsgemäß also etwa zur Erstellung eines elektronischen Indexes, geeignet zur schnellen Konstellationssuche oder auch zur schnellen Konstellationssuche mittels eines solchen Index funktioniert.

Insbesondere kann ein Datenverarbeitungssystem erfindungsgemäß zur Erstellung eines elektronischen Indexes, geeignet zur schnellen Konstellationssuche, über einer elektronischen Datenbank mit einem Datenbestand eingerichtet sein, wobei das Datenverarbeitungssystem eine Datenbank, über die es den elektronischen Index erstellt, und ferner Mittel aufweist, welche hierzu gebildete Indexobjekte in Klassen einteilen, welche jeweils aus einem Repräsentanten, nämlich einem Indexobjekt der jeweiligen Klasse und aus Transformationsabbildungen aus einer Menge zulässiger Transformationsabbildungen bestehen, deren Mitglieder (Transformationsabbildungen) jeweils den gewählten Repräsentanten in Indexobjekte des Datenbestandes nur der jeweiligen Klasse überführen.

Auch kann ein Datenverarbeitungssystem vorzugsweise erfindungsgemäß zur schnellen Konstellationssuche einer durch Indexobjekte gegebenen Suchkonstellation in einer elektronischen Datenbank eingerichtet sein, über die, unter Verwendung des erfindungsgemäßen Verfahrens oder eines erfindungsgemäß eingerichteten Datenverarbeitungssystems der elektronische Index erstellt wurde, wobei es Mittel zur Ermittlung einer Treffermenge für eine Suchkonstellation aufweist, die zunächst für jedes Indexobjekt der Suchkonstellation aus der Menge zulässiger Transformationsabbildungen eine Untermenge von Transformationsabbildungen erzeugen, welche das Indexobjekt der Suchkonstellation in die Indexobjekte des Datenbestandes überführen und sodann aus den so erhaltenen Untermengen die Schnittmenge bilden, welche die Treffermenge darstellt.

Ebenso kann vorzugsweise ein Datenverarbeitungssystem erfindungsgemäß zur schnellen Konstellationssuche einer durch eine unscharfe Suchkonstellation gegebenen Suchkonstellation in einer elektronischen Datenbank eingerichtet sein, über die unter Verwendung des erfindungsgemäßen Verfahrens oder eines erfindungsgemäß eingerichteten Datenverarbeitungssystems der elektronische Index erstellt wurde, wobei die unscharfe Suchkonstellation durch eine Menge von Komponentenmengen, bestehend jeweils aus Indexobjekten, gegeben ist und das Datenverarbeitungssystem Mittel aufweist, die hieraus eine Menge exakter Suchkonstellationen bilden indem sie alle Suchkonstellationen bilden, die entstehen, wenn jeweils aus jeder der Komponentenmengen genau ein beliebiges Indexobjekt ausgewählt wird und wobei es ferner Mittel zur Ermittlung einer Treffermenge für die unscharfe Suchkonstellation aufweist, die für jede Komponentenmenge der unscharfen Suchkonstellation eine Untermenge von Transformationsabbildungen bestimmen, bestehend aus allen Transformationsabbildungen, die irgendein Indexobjekt dieser Komponentenmenge in ein Indexobjekt des Datenbestands überführen, und die aus den für alle Komponentenmengen so bestimmten Untermengen die Schnittmenge bilden, welche die Treffermenge darstellt.

Auch eignen sich die Verfahren nach der vorliegenden Erfindung zu ihrer Durchführung jeweils als Computerprogrammprodukt zum Laden in den Speicher eines Computers und zum Ablauf auf diesem Computer.

Ergänzend sei angeführt, daß sich die Verfahren nach der vorliegenden Erfindung auch jeweils als Computerprogrammprodukt eignen, welches ein computerlesbares Medium mit Computerprogramm-Code-Mitteln aufweist und bei dem nach Laden des Computerprogramms der Computer durch das Programm zur Durchführung der hier beschriebenen erfindungsgemäßen Verfahren veranlaßt wird.

Im folgenden werden nicht einschränkend zu verstehende Ausführungsbeispiele anhand der Zeichnung besprochen. In dieser zeigt:

Fig. **1** den Zusammenhang zwischen Daten und Indexobjekten, sowie die Überführung der Objekte mit Hilfe der dazugehörigen Vorschriften anhand einer schematischen Darstellung,

Fig. **2** beispielhaft ein Datenobjekt einer Textdatenbank und als Vergröberung ein zugehöriges Indexobjekt,

Fig. **3** den Ablauf des erfindungsgemäßen Verfahrens anhand einer schematischen Darstellung von Gebäudekonstellationen auf Landkarten,

Fig. **4** den Datenbestand einer Datenbank für mehrstimmige Musik in Form einer Klavierwalzendarstellung,

Fig. **5** eine Anfrage an die Datenbank für mehrstimmige Musik in Form einer Klavierwalzendarstellung,

Fig. **6** eine weitere Anfrage an die Datenbank für mehrstimmige Musik in Form einer Klavierwalzendarstellung,

Fig. **7** den Beginn von Johann Sebastian Bachs C-Dur Fuge aus dem Wohltemperierten Klavier (Band 1) in der sog. Klavierwalzendarstellung,

Fig. **8** eine aus neun Noten bestehende Anfrage *T* (Beginn des Fugenthemas), und in

Fig. **9** eine isolierte Darstellung des gefundenen Themas an den jeweiligen Fundstellen.

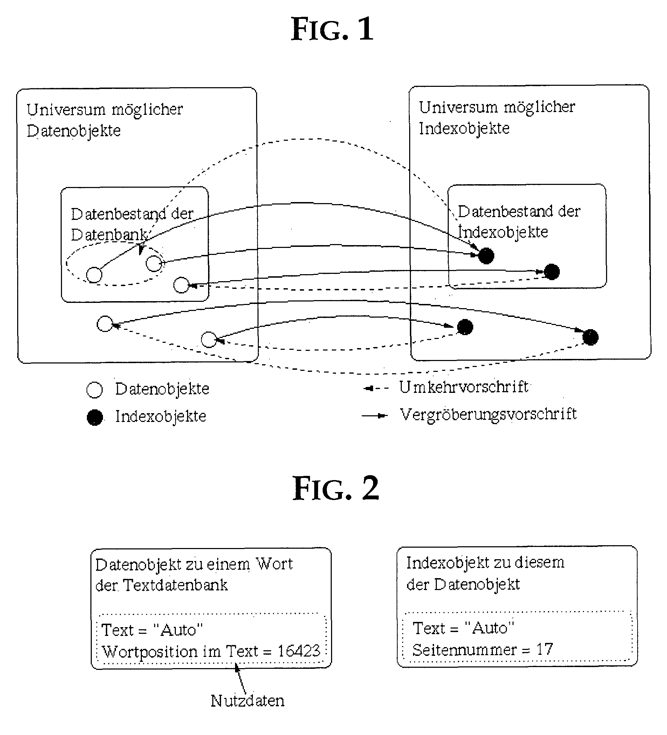

Fig. **1** zeigt den Zusammenhang zwischen Daten und Indexobjekten, sowie die Überführung der Objekte mit Hilfe der dazugehörigen Vorschriften anhand einer schematischen Darstellung.

Die Figur gibt eine Übersicht über die verwendeten Begriffe. In der Abbildung ist links das Universum aller möglicher Datenobjekte dargestellt. Der Datenbestand der Datenbank bildet eine Teilmenge hiervon. Rechts sind analog das Universum und der Datenbestand der Indexobjekte angegeben. Datenobjekte sind als Kreise stilisiert, Indexobjekte als ausgefüllte Kreise. Die Vergröberungsabbildung ist durch eine durchgezogene Linie dargestellt, die Umkehrabbildung durch eine gestrichelte.

Figur **2** zeigt beispielhaft ein Datenobjekt einer Textdatenbank (links) und als Vergröberung ein zugehöriges Indexobjekt (rechts). Die Vergröberung erfolgt bezüglich der Positionsangabe und wird für dieses Beispiel später genauer beschrieben.

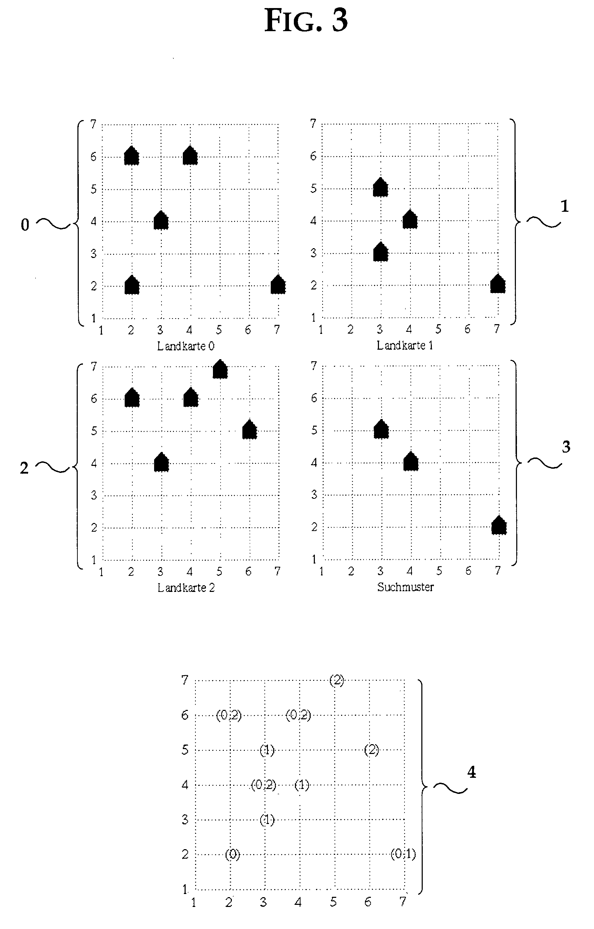

Figur **3** zeigt den Ablauf des erfindungsgemäßen Verfahrens anhand einer schematischen Darstellung von Gebäudekonstellationen auf Landkarten.

Jedes Gebäude ist auf der jeweiligen Landkarte an einer bestimmten Position eingezeichnet. In der Datenbank steht jedes Gebäude für ein Datenobjekt. Die Nutzdaten zu jedem Objekt sind wiederum Position, Grundriß und die Nummer der Landkarte des zugehörigen Gebäudes. Um nun den Index zu erstellen wird zunächst zur Verringerung der Anzahl der möglichen Positionen innerhalb der Landkarten eine Gittereinteilung vorgenommen, danach wird aus den Umrissdaten die Schwerpunktsposition der Gebäude ermittelt und jetzt nur noch diese Schwerpunktsposition im Rahmen der Genauigkeit der Gittereinteilung auf den Karten eingetragen. Durch diese Vergröberungsvorschrift ist jedem Gebäude nun eindeutig ein Koordinatenpaar zugeordnet. Aus Datenobjekten sind Indexobjekte geworden.

Zur endgültigen Erstellung des Indexes wird die Menge der Indexobjekte in Klassen von Indexobjekten eingeteilt. Merkmal der Klassen ist es, das sich die Indexobjekte an übereinstimmenden Koordinaten, jedoch auf unterschiedlichen Landkarten befinden. Die Wahl der Repräsentanten fällt hier auf die Indexobjekte mit der Landkartennummer Null. Grundsätzlich ist es aber ebenso möglich, den Repräsentanten aus der jeweiligen Klasse beliebig - hier vorliegend also aus jeder beliebigen Landkarte - zu wählen. Eine praktische und einfache Möglichkeit besteht etwa darin, das erste als Repräsentant geeignete Datenobjekt einfach als solchen auch zu nehmen. Die Menge der Transformationsabbildungen eines Repräsentanten besteht aus der Menge der Abbildungen, die zu solch einer Nummer der Landkarte führen - etwa durch Erhöhung oder Verminderung der Landkartennummer -, so daß sich an der durch den Repräsentanten bezeichneten Stelle ein Gebäude befindet. Die Konstellationssuche kann nun wie folgt durchgeführt werden: Die Menge der zulässigen Transformationsabbildungen wird so gewählt, dass diese den Indexobjekten neue Indexobjekte zuordnen indem sie die Kartennummer des Objekts um eine bestimmte Zahl erhöhen. In anderen Worten: Die Menge der zulässigen Transformationsabbildungen besteht aus allen Transformationsabbildungen, die die Nummer der Landkarte um ein festes $c \in \mathbf{Z}$ erhöhen. Das Symbol c ist eine Abkürzung für die Transformation Tc. Jede Transformationsabbildung ist nun durch diese Zahl c eindeutig bestimmt. In Figur 2 sind 3 Landkarten **0, 1**, und **2** sowie eine Suchkonstellation **3** graphisch dargestellt. Es soll nun die Suchkonstellation **3** mit dem erfindungsgemäßen Verfahren in den **3** Landkarten **0, 1, 2** gesucht werden. Die Indexobjekte des Datenbestandes können in Tripelschreibweise wie folgt dargestellt werden:

Menge der Indexobjekte = { (2,2,0), (2,6,0), (3,4,0), (4,6,0), (7,2,0), (3,3,1), (3,5,1), (4,4,1), (7,2,1), (2,6,2), (3,4,2), (4,6,2), (5,7,2), (6,5,2) }

Die Suchkonstellation besteht aus Indexobjekten wie folgt:

Suchkonstellation = { (3,5,0), (4,4,0), (7,2,0) }.

Die Suchkonstellation besteht hier aus Zahlentripeln, wobei jeweils die dritten Komponenten, nämlich die Landkartennummern, auf Null gesetzt wurden.

Hier führt nur die Transformationsabbildung 1 ( T1(x,y,z):= (x,y,z+1) ) zu dem gewünschten Erfolg, denn die vorgegebene Suchkonstellation liegt nur in der Landkarte mit der Landkartennummer Eins vor, und zwar in der (Treffer-) Konstellation

{(3,5,1),(4,4,1),(7,2,1)}

des Datenbestands. Die zugehörige Treffermenge, also die Menge der Transformationsabbildungen, die die Suchanfrage in die gefundene Konstellation überführen, lautet:

Treffermenge = { T1}.

Der gefundenen Datenkonstellation ist auf der letzten Stelle der Tripel zu entnehmen, daß sich alle Daten in Landkarte 1 befinden. Die endgültige Antwort auf die Suchanfrage lautet somit 1.

Ein weiteres Beispiel basiert ebenfalls auf dem vorliegenden Index, welcher auch in einer Indexlandkarte **4** visualisiert ist. Die Koordinaten, an welchen sich Gebäude befinden sind jetzt nicht mehr mit einem Gebäudesymbol versehen, sondern mit den Landkartennummern. Da die Transformationsabbildungen günstig gewählt wurden, entsprechen die Zahlen ebenfalls den Transformationsvorschriften, die notwendig sind, um den entsprechenden Repräsentanten auf ein Indexobjekt des Datenbestandes abzubilden. Ist an einer Koordinate nichts angegeben, so gibt es an dieser Koordinate auf keiner der Karten ein Gebäude.

Folgende Suchkonstellation wird angegeben :

Suchkonstellation = {(3,5,2), (4,4,2), (7,2,2)}

Die Angabe der letzten Komponente des Zahlentripels mag für das vorliegende Beispiel grundsätzlich unerheblich erscheinen. Betrachtet man jedoch alternative Anfragemöglichkeiten, so wird deutlich, daß diese Komponente sehr wohl eine wichtige Funktion hat. So kann es etwa sein, daß die Suchkonstellation durch Anklicken in unterschiedlichen elektronischen Landkarten gewählt wird, in diesem Falle unterscheiden sich die Suchanfragen unter Umständen in der letzten Stelle des Tripels. Vorliegend bedeutet dies, daß die gesamte Suchkonstellation in Karte Nummer 2 angeklickt wurde. Überdies ist die letzte Komponente des Zahlentripels für die Durchführung der Suche von fundamentaler Bedeutung, wie bei der Betrachtung der nächsten beiden Anfragebeispiele deutlich wird.

Zunächst muß daher nun eine Normierungsabbildung berechnet werden. Dazu werden alle zulässigen Transformationsabbildungen der jeweiligen Klasse auf das entsprechende Indexobjekt der Suchkonstellation angewandt, wobei diejenige Transformationsabbildung, die den Repräsentanten der zugehörigen Klasse ergibt dann die gesuchte Normierungstransformation NT darstellt. Sie ergibt sich hier wie folgt für das erste, wie auch alle anderen Indexobjekte für die hier gegebene Suchkonstellation als Normierungsabbildung mit

NT-2(x,y,z):= (x,y,z+(-2)), also c=-2.

NT-2 hier nun auf alle Indexobjekte angewandt ergibt:

$$NT\text{-}2(3,5,2) = (3,5,2) - (0,0,2) = (3,5,0),$$

$$NT\text{-}2(4,3,2) = (4,4,2) - (0,0,2) = (4,4,0),$$

$$NT\text{-}2(7,2,2) = (7,2,2) - (0,0,2) = (7,2,0).$$

Damit erhalten wir:

Normierte Suchkonstellation = { (3,5,0), (4,4,0), (7,2,0) }.

Nun wird für jedes Indexobjekt der Suchkonstellation aus der Menge zulässiger Transformationsabbildungen eine Untermenge von Transformationsabbildungen erzeugt, welche die Indexobjekte der Suchkonstellation in die Indexobjekte des Datenbestandes überführen.

Hierzu werden die zulässigen Transformationsvorschriften durchlaufen, und nur die Transformationsvorschrift T1 mit

$$T1(x,y,z) := (x,y,z+1)$$

ergibt für die Suchkonstellation einen Treffer. Dies ergibt sich aus folgendem:
Zum Indexobjekt (3,5,0) ergibt sich die zugehörige Untermenge wie folgt:

$$T1(3,5,0) = (3,5,0) + (0,0,1) = (3,5,1)$$

An der Stelle (3,5) in Landkarte 1 befindet sich ein Indexobjekt des Datenbestandes. Folglich führt die Transformationsabbildung T1 angewandt auf das Indexobjekt (3,5,0) des Suchkonstellation zu einem Indexobjekt des Datenbestandes, nämlich (3,5,1). Weitere Transformationsabbildungen führen zu keinem weiteren Ergebnis. Damit ergibt sich die zu dem Indexobjekt (3,5,0) gehörige Untermenge wie folgt:

$$U_{(3,5,0)} = \{ T1 \}$$

Für die weiteren Untermengen ergibt sich:

$$U_{(4,4,0)} = \{ T1 \} \text{ und } U_{(7,2,0)} = \{ T1 \}$$

Sodann wird für jedes Indexobjekt der Untermenge eine zulässige Transformationsabbildung, welche sich aus einer Verknüpfung der Normierungsabbildungen, hier alle NT-2, und den Elementen der Untermengen, hier alle T1, ergibt, ermittelt. Hieraus ergeben sich die renormierten Untermengen wie folgt:

$$\begin{aligned}\text{Renormierte Untermenge } RU_{(3,5,0)} &= \{ T1 \circ NT\text{-}2 \} \\ &= \{ (x,y,z+1) \circ (x,y,z\text{-}2) \} \\ &= \{ (x,y,z\text{-}1) \} = \{T\text{-}1\}\end{aligned}$$

welche gleich $RU_{(4,4,0)} = RU_{(7,2,0)}$ ist.

Die Schnittmenge aller renormierten Untermengen RU ist damit die

Treffermenge = { T-1}.

Das Element der so erhaltenen normierten Treffermenge, mithin also die zulässige Transformationsabbildung T-1(x,y,z) := (x,y,z+(-1)), d.h. c = -1 transformiert wie gefordert jedes Element der Suchkonstellation in ein Indexobjekt des Datenbestandes.

Ein drittes Beispiel behandelt die Suchkonstellation

{(7,2,0), (3,4,1)}.

Als erstes wird der Repräsentant durch Anwendung der geeigneten Normierungsabbildung:

(7,2,0) - (0,0,0) = (7,2,0) (hier: NT0)

(3,4,1) - (0,0,1) = (3,4,0) (hier: NT-1)

erzeugt.

Zur ersten Komponente der Suchanfrage findet man mit den Transformationsabbildungen T0 und T1 zwei Treffer, somit $U_{(7,2,0)}$ = {T0,T1}.

Zur zweiten Komponente der Suchanfrage findet man mit den Transformationsabbildungen T0 und T2 zwei Treffer, somit $U_{(3,4,1)}$ = {T0,T2}.

Sodann wird eine zulässige Transformationsabbildung, welche sich aus einer Verknüpfung der Normierungsabbildungen, hier NT0 für das Indexobjekt (7,2,0) der Suchkonstellation und NT-1 für das Indexobjekt (3,4,1) der Suchkonstellation und den Elementen der Untermengen, hier T0 und T1 aus $U_{(7,2,0)}$ und T0 und T2 aus $U_{(3,4,1)}$ ergibt, ermittelt und auf jedes Indexobjekt dieser Untermengen angewandt, woraus sich die renormierten Untermengen wie folgt ergeben:

$$\text{Renormierte Untermenge } RU_{(7,2,0)} = \{ T0 \circ NT0, T1 \circ NT0\}$$

$$= \{ (x,y,z+0) \circ (x,y,z+0), (x,y,z+1) \circ (x,y,z+0)$$

$$= \{ (x,y,z+0), (x,y,z+1) \} = \{T0,T1\}$$

$$\text{Renormierte Untermenge } RU_{(3,4,1)} = \{ T0 \circ NT\text{-}1, T2 \circ NT\text{-}1\}$$

$$= \{ (x,y,z+0) \circ (x,y,z-1), (x,y,z+2) \circ (x,y,z-1) \}$$

$$= \{ (x,y,z-1), (x,y,z+1) \} = \{T\text{-}1,T1\}$$

Die Schnittmengenbildung der renormierten Untermengen ergibt nun die Treffermenge:

$$\{T0,T1\} \cap \{T\text{-}1,T1\} = \{T1\}.$$

Das Element der so erhaltenen normierten Treffermenge transformiert jedes Element der Suchkonstellation in ein Indexobjekt des Datenbestandes was ja gerade einen Treffer der Suchanfrage charakterisiert.

Fig. **4** zeigt den Ablauf des erfindungsgemäßen Verfahrens anhand der Suche von Noten in mehrstimmiger Musik.

Die Datenobjekte des Datenbestands sind einzelne Noten, gekennzeichnet durch die Nutzdaten Einsatzzeit, Tonhöhe und Tondauer. In der Figur ist der Datenbestand der Datenbank in der bekannten Klavierwalzennotation dargestellt. Auf der horizontalen Achse des hierzu verwendeten Gitters sind die Einsatzzeiten (hier 0,...,7), auf der vertikalen Achse die Tonhöhen (hier c,...,g) in Halbtonschritten abgetragen. Ein ausgefülltes Rechteck beginnend an der Position (x,y) bedeutet, daß im Datenbestand ein Datenobjekt mit der Tonhöhe x und der Einsatzzeit y enthalten ist. Die Tondauer ist proportional zur Länge des ausgefüllten Rechtecks in horizontaler Richtung.

Zur Erstellung des Indexes werden nun Indexobjekte gebildet. Diese entstehen in diesem Beispiel aus den Datenobjekten unter Weglassen der Tondauern. Somit läßt sich die Menge der Indexobjekte zum Datenbestand aus Fig. 4 in Tupelschreibweise als

$$\{(c,0), (e,0), (f,1), (d,2), (f\#,2), (d\#,3), (g,3), (c,4), (e,4), (f\#,4), (f,5)\}$$

schreiben.

Zur Erstellung des Indexes werden die Indexobjekte in Klassen eingeteilt. In diesem Beispiel ist das Merkmal der Klassen, daß die Indexobjekte eine übereinstimmende Tonhöhe, jedoch eine beliebige Einsatzzeit besitzen. Es existiert also zu jeder Tonhöhe eine Klasse. Die Indexobjekte des Datenbestands zur Klasse für die Tonhöhe f sind z. B. durch die Menge {(f,1), (f,5)} gegeben. Die Wahl der Repräsentanten fällt in diesem Beispiel auf die Indexobjekte mit der Einsatzzeit 0. Der Repräsentant für die Klasse zur Tonhöhe f ist somit (f,0). Die Menge der Transformationsabbildungen zu einem Repräsentanten besteht aus der Menge der Abbildungen, die durch Erhöhung der Einsatzzeit zu einem Indexobjekt des Datenbestands führen. Wir bezeichnen diejenige Transformationsabbildung, die die Einsatzzeit eines Indexobjekts um einen ganzzahligen Wert c verringert oder erhöht mit Tc. Tc läßt die Tonhöhe jedoch fest, also insgesamt Tc(x,y) = (x,y+c). Ist aus dem Zusammenhang klar, daß es um solche Transformationsabbildungen geht, bezeichnen wir die Abbildung nur durch den ganzzahligen Wert c. Die Menge der Transformationsabbildungen zum Repräsentanten (f,0) im vorliegenden Beispiel ist {T1, T5} oder, abkürzend, {1,5}.

Die Menge der zulässigen Transformationsabbildungen ist die Menge aller Tc für eine beliebige ganze Zahl c, also die Menge aller Abbildungen, die die Einsatzzeit eines Indexobjekts um eine bestimmte Zahl c erhöhen oder erniedrigen.

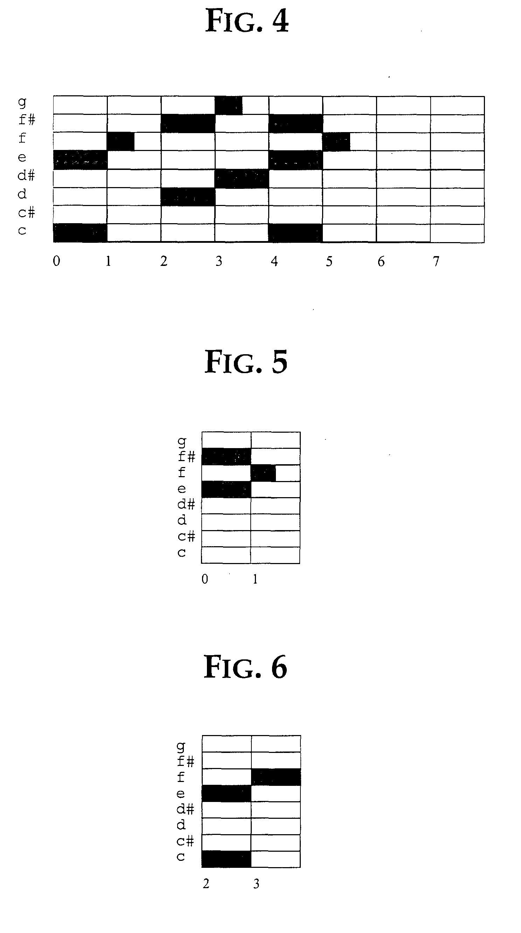

Fig. **5** zeigt eine beispielhafte Anfrage. Die Suchkonstellation aus Indexobjekten zu dieser Anfrage in Klavierwalzendarstellung ist hier

$$\{(e,0), (f\#,0), (f,1)\}.$$

Die Indexobjekte (e,0), (f#,0) sind bereits Repräsentanten, nämlich zu den Klassen der Noten e und f#. Daher muß im Falle dieser Indexobjekte keine Normierungstransformation zur Bestimmung des zugehörigen Repräsentanten durchgeführt werden.

Zur Bestimmung des Repräsentanten des Indexobjekts (f,1) wird die Normierungstransformation NT-1 verwendet:

$$NT\text{-}1(f,1) = (f,1) + (0,-1) = (f,0).$$

((f,0) ist Repräsentant der Klasse zur Note f.)

Die normierte Suchkonstellation ist

$$[(e,0), (f\#,0), (f,0)]$$

(welches auch eine Multimenge sein könnte). Für alle Komponenten dieser normierten Suchkonstellation werden nun die (Treffer-) Untermengen, $U_{(e,0),}$ $U_{(f,1),}$ $U_{(f\#,0),}$ bestimmt. Man erhält

$$U_{(e,0)} =\{0,4\}, U_{(f,1)} = \{1,5\}, U_{(f\#,0)} = \{2,4\}.$$

Zu jeder dieser Untermengen werden nun renormierte Untermengen (bestehend aus zulässigen Transformationsabbildungen) bestimmt. Zu einer Untermenge U wird dabei eine renormierte Untermenge RU bestimmt, indem zu jeder Transformationsabbildung aus U durch Komposition der oben bestimmten Normierungsabbildung zu U mit der Transformationsabbildung eine neue Transformationsabbildung bestimmt wird.

Die Untermenge $U_{(f,1)}$ wurde in diesem Beispiel zum Indexobjekt (f,1) der Suchkonstellation bestimmt. Da T-1(f,1) = (f,0), ist die zugehörige (Re-) Normierungsabbildung NT-1 = T-1. Die zugehörige renormierte Untermenge $RU_{(f,1)}$ ist somit

$$RU_{(f,1)} = U_{(f,1)} \circ T\text{-}1 = \{ T1 \circ NT\text{-}1, T5 \circ NT\text{-}1\} = \{T0,T4\} = \{0,4\}.$$

Da (e,0) und (f#,0) bereits Repräsentanten waren, ist hier keine (Re-) Normierung nötig, es gelten also $RU_{(e,0)} = U_{(e,0)}$ und $RU_{(f\#,0)} = U_{(f\#,0)}$.

Die Schnittmenge der renormierten Untermengen,

$$RU_{(e,0)} \cap RU_{(f\#,0)} \cap RU_{(f,1)} = \{0,4\} \cap \{2,4\} \cap \{0,4\} = \{4\} = \{T4\},$$

ist die Treffermenge. Im vorliegenden Beispiel ist die Transformationsabbildung T4 also der einzige Treffer. Die Notenmenge

$$\{(e,4), (f\#,4),(f,5)\} = T4 \circ \{(e,0), (f\#,0), (f,1)\},$$

die durch Transformation der Suchkonstellation mit der Transformationsabbildung T4 entsteht, stellt das Vorkommen der Suchkonstellation im Datenbestand dar.

Fig. **6** zeigt ein weiteres Beispiel für eine Suchanfrage. Die Suchkonstellation aus Indexobjekten zu dieser Anfrage in Klavierwalzendarstellung ist hier

$$\{(c,2), (e,2), (f,3)\}.$$

Da NT-1(c,2) = (c,0), NT-2(e,2) = (e,0) und NT-3(f,3) = (f,0) zu den Indexobjekten der Suchkonstellation die jeweiligen Repräsentanten liefern, sind NT-2, NT-2 und NT-3 die Normierungsabbildungen zu (c,2), (e,2) und (f,3).

Die (Treffer-) Untermengen zur normierten Suchkonstellation [(c,0), (e,0), (f,0)] sind

$$U_{(c,2)} = \{0,4\}, U_{(e,2)} = \{0,4\} \text{ und } U_{(f,2)} = \{1,5\}.$$

Durch (Re-) Normierung mit den zugehörigen Normierungsabbildungen NT-2, NT-2 und NT-3 erhält man die renormierten Untermengen

$$RU_{(c,2)}= U_{(c,2)} \circ T\text{-}2 = \{ T0 \circ NT\text{-}2, T5 \circ NT\text{-}2\} = \{T\text{-}2,T2\},$$

$$RU_{(e,2)}= U_{(e,2)} \circ T\text{-}2 = \{ T0 \circ NT\text{-}2, T5 \circ NT\text{-}2\} = \{T\text{-}2,T2\},$$

$$RU_{(f,3)} = U_{(f,2)} \circ T\text{-}3 = \{ T1 \circ NT\text{-}3, T5 \circ NT\text{-}3\} = \{T\text{-}2,T2\}.$$

Die Treffermenge wird durch Schnittbildung zu

$$RU_{(c,2)} \cap RU_{(c,2)} \cap RU_{(f,3)} = \{T\text{-}2,T2\}$$

bestimmt. Dies bedeutet, daß die gefundenen Vorkommen der Suchkonstellation die Notenmengen

$$\{(c,0), (e,0),(f,1)\} = T\text{-}2 \circ \{(c,2), (e,2), (f,3)\}$$

und

$$\{(c,4), (e,4),(f,5)\} = T2 \circ \{(c,2), (e,2), (f,3)\}$$

aus dem Datenbestand sind.

Man beachte, daß in diesem Beispiel Treffer gefunden wurden, obwohl die Note (f,3) der Suchkonstellation in Fig. **6** eine Notendauer aufweist, die nicht mit der Notendauer der Noten (f,1) und (f,5) innerhalb der Vorkommen der Suchkonstellation übereinstimmt.

Fig. **7** zeigt den Beginn von Johann Sebastian Bachs C-Dur Fuge aus dem Wohltemperierten Klavier (Band 1) in der Klavierwalzendarstellung. Hier ist jede Note ($h,t,d$) durch ein achsenparalleles Rechteck der Einheitshöhe 1 beschrieben, dessen untere linke Ecke mit den Koordinaten ($h,t$) die Tonhöhe und Einsatzzeit spezifiziert, während die Breite des Rechtecks die Tondauer beschreibt.

Fig. **8** zeigt eine aus neun Noten bestehende Anfrage $T$. Aus musikalischer Sicht wird hier der Beginn des Fugenthemas angefragt. Wir suchen nun nach allen Wiederholungen des Fugenthemas in der Fuge, wobei wir zeitliche und tonhöhenmäßige Verschiebungen erlauben wollen. Aufgrund dieser Aufgabenstellung lassen wir die additiv geschriebene abelsche Gruppe $G=\mathbf{Z}^2$ auf $M= \mathbf{Z}^3$ wie folgt operieren: ist $g=(a,b) \in G$ und $m=(h,t,d) \in M,$ so sei $gm := (a+h, b+t, d)$. Eine Verschiebung der angefragten Konstellationen $T$ mittels $g=(a,b)$ bedeutet also eine zeitliche Verschiebung jeder Note der Konstellationen um $b$ Zeiteinheiten bei gleichzeitigem Transponieren jeder Note um $a$ Halbtöne. Anschaulich gesprochen fasse man $T$ als starres Gebilde von Rechtecken auf. Mittels $G=\mathbf{Z}^2$ ist es nun erlaubt, dieses starre Gebilde als Ganzes um einen ganzzahligen Vektor aus $\mathbf{Z}^2$ zu verschieben. Die hervorgehobenen Stellen in Fig. **9** zeigen vier Vorkommen des Fugenthemas im angezeigten Bereich. Nun wird die Aufgabenstellung abgeändert, indem nur beliebige ganzzahlige Zeitverschiebungen zugelassen werden. Dieser Aufgabenstellung entspricht die durch $g(h,t,d) := (h,g+t,d)$ definierte Operation der Gruppe $\mathbf{Z}$ auf $\mathbf{Z}^3$. In diesem Fall gibt es im in Fig. 7 angezeigten Bereich nur einen Treffer zur obigen Anfrage $T$ aus Fig. **8**, nämlich direkt zu Beginn der Fuge. Dieser Treffer ist das in Fig. **9** ganz links dargestellte Vorkommen von T im Musikstück aus Fig.**7**.

Fig. **9** zeigt in isolierter Darstellung die vier Vorkommen der Anfrage aus Fig. **8** im angezeigten Bereich des Stücks aus Fig. **7**. Diese Vorkommen bzw. (Treffer-) Konstellationen beziehen sich auf die oben beschriebene Gruppenoperation von $G=\mathbf{Z}^2$ auf $M= \mathbf{Z}^3$, $gm = (a+h, b+t, d)$.

**Patentansprüche**

**1.** Verfahren zur Erstellung eines elektronischen Indexes, geeignet zur schnellen Konstellationssuche, über einer elektronischen Datenbank mit einem Datenbestand, wobei

der elektronische Index über der elektronischen Datenbank erstellt wird, und

hierzu gebildete Indexobjekte in Klassen eingeteilt werden, welche jeweils

aus einem Repräsentanten, nämlich einem Indexobjekt der jeweiligen Klasse, und

aus Transformationsabbildungen aus einer Menge zulässiger Transformationsabbildungen bestehen,

deren Mitglieder (Transformationsabbildungen) jeweils den gewählten Repräsentanten in Indexobjekte des Datenbestandes nur der jeweiligen Klasse überführen.

**2.** Elektronisches Verfahren zur schnellen Konstellationssuche einer durch Indexobjekte gegebenen Suchkonstellation in einer elektronischen Datenbank, über die, unter Verwendung des Verfahrens nach Anspruch 1 der elektronische Index erstellt wurde, wobei die Berechnung einer Treffermenge für eine Suchkonstellation so erfolgt, daß

(1) zunächst für jedes Indexobjekt der Suchkonstellation aus der Menge zulässiger Transformationsabbildungen eine Untermenge von Transformationsabbildungen erzeugt wird, welche das Indexobjekt der Suchkonstellation in die Indexobjekte des Datenbestandes überführen und

(2) sodann aus den so erhaltenen Untermengen die Schnittmenge gebildet wird, welche die Treffermenge darstellt.

3. Elektronisches Verfahren zur schnellen Konstellationssuche nach Anspruch 2, **dadurch gekennzeichnet, daß**

   (0) zunächst vor Schritt (1) jedes Indexobjekt der Suchkonstellation durch eine Normierungsabbildung aus der Menge der zulässigen Transformationsabbildungen oder einer Verknüpfung dieser Transformationsabbildungen so normiert wird, daß die Anwendung der Normierungsabbildung (Transformation) auf das Indexobjekt der Suchkonstellation den Repräsentanten der Klasse ergibt, zu der das Indexobjekt des Suchkonstellation gehört, und

   (1a) nach Schritt (1) und vor Schritt (2) sodann für jedes Element jeder Untermenge eine zulässige Transformationsabbildung ermittelt wird, welche sich aus einer Verknüpfung der Normierungsabbildung, welche zu dem zu der jeweiligen Untermenge zugehörigen Indexobjekt der Suchkonstellation gehört, mit dem jeweiligen Element der Untermenge ergibt, woraus sich als Ergebnis renormierte Untermengen ergeben.

4. Elektronisches Verfahren zur schnellen Konstellationssuche **dadurch gekennzeichnet, daß** eine unscharfe Suchkonstellation durch eine Menge von Komponentenmengen, bestehend jeweils aus Indexobjekten, gegeben ist und hieraus eine Menge exakter Suchkonstellationen gebildet wird indem alle Suchkonstellationen gebildet werden die entstehen, wenn jeweils aus jeder der Komponentenmengen genau ein beliebiges Indexobjekt ausgewählt wird und sodann die Bestimmung der Treffermenge so erfolgt, daß zunächst die Treffermengen aller sich ergebenden exakten Suchkonstellationen nach dem Verfahren nach Anspruch 2 oder 3 einzeln bestimmt werden und sodann die Treffermenge der unscharfen Suchkonstellation durch die Vereinigung aller zuvor für die jeweiligen exakten Suchkonstellationen ermittelten einzelnen Treffermengen gebildet wird.

5. Elektronisches Verfahren zur schnellen Konstellationssuche einer durch eine unscharfe Suchkonstellation gegebenen Suchkonstellation in einer elektronischen Datenbank, über die, unter Verwendung des Verfahrens nach Anspruch 1 der elektronische Index erstellt wurde, wobei die unscharfe Suchkonstellation durch eine Menge von Komponentenmengen, bestehend jeweils aus Indexobjekten, gegeben ist und hieraus eine Menge exakter Suchkonstellationen gebildet wird indem alle Suchkonstellationen gebildet werden, die entstehen, wenn jeweils aus jeder der Komponentenmengen genau ein beliebiges Indexobjekt ausgewählt wird und die Berechnung einer Treffermenge für die unscharfe Suchkonstellation so erfolgt, daß

   (1) für jede Komponentenmenge der unscharfen Suchkonstellation eine Untermenge von Transformationsabbildungen bestimmt wird, bestehend aus allen Transformationsabbildungen, die irgendein Indexobjekt dieser Komponentenmenge in ein Indexobjekt des Datenbestands überführen, und

   (2) aus den für alle Komponentenmengen so bestimmten Untermengen die Schnittmenge gebildet wird, welche die Treffermenge darstellt.

6. Elektronisches Verfahren zur schnellen Konstellationssuche nach Anspruch 4 oder 5 **dadurch gekennzeichnet, daß** alle zu einer unscharfen Suchkonstellation zugehörigen exakten Suchkonstellationen mit einer Wichtung versehen werden und hieraus, vorzugsweise unter Verwendung einer Berechnungsvorschrift, zu jedem Element der Treffermenge ein Gewicht bestimmt wird.

7. Elektronisches Verfahren zur schnellen Konstellationssuche nach einem der vorhergehenden Ansprüche, **dadurch gekennzeichnet, daß** die Menge der zulässigen Transformationsabbildungen interaktiv festgelegt werden kann.

8. Elektronisches Verfahren zur schnellen Konstellationssuche nach einem der vorhergehenden Anspüche, **dadurch gekennzeichnet, daß** das Verfahren fehlertolerant arbeitet indem zur Bestimmung der Treffermenge anhand einer vorgegebenen Fehleranzahl anstelle des hier in Bezug genommenen Verfahrensschrittes (2) nunmehr

   (2) diejenige Menge aus Transformationsabbildungen gebildet wird, die in genau oder höchstens sovielen der Untermengen nicht vorkommen, wie die vorgegebene Fehleranzahl angibt und die nun die Treffermenge darstellt.

9. Verfahren zur Erzeugung einer Rangliste unter Verwendung des Verfahrens nach Anspruch 9 **dadurch gekennzeichnet, daß** das Verfahren nach Anspruch 9 für eine oder mehrere Fehleranzahlen durchgeführt wird und die Rangliste durch Auflistung der Treffer der Treffermengen in der Reihenfolge der Fehleranzahlen durchgeführt wird.

**10.** Verfahren zur Erstellung von mindestens einem elektronischen Unterindex unter Verwendung des Verfahrens zur Erstellung eines elektronischen Index nach Anspruch 1, **dadurch gekennzeichnet, daß**

(a) zunächst ein elektronischer Index nach dem Verfahren des Anspruchs 1 gebildet wird und sodann

(b) hierauf aufbauend zumindest ein Unterindex gebildet wird,

- indem der Datenbestand der Indexobjekte eines jeweiligen Unterindexes durch Anwendung einer zugehörigen Vergröberungsabbildung auf alle Indexobjekte des Indexes gebildet wird,

wobei

- zu jedem Unterindex die Vergröberungsabbildung als zugehörig ausgewählt wird, die Indexobjekte auf Indexobjekte des Unterindexes abbildet,
- die zulässigen Transformationsabbildungen der Unterindexe mit denen des Indexes übereinstimmen, und
- die ausgewählten Vergröberungsabbildungen mit den zulässigen Transformationsabbildungen bezüglich der Reihenfolge der Ausführung vertauschbar sind.

**11.** Verfahren zur Erstellung von mindestens einem elektronischen Unterindex unter Verwendung des Verfahrens zur Erstellung eines elektronischen Index nach Anspruch 10, **dadurch gekennzeichnet, daß** Vergröberungsbbildungen für die Unterindexe gewählt werden die in ihrer Gesamtheit betrachtet den Voraussetzungen des Chinesischen Restesatzes genügen.

**12.** Elektronisches Verfahren zur schnellen Konstellationssuche einer durch Indexobjekte gegebenen Suchkonstellation in einer elektronischen Datenbank, über die, unter Verwendung des Verfahrens nach Anspruch 10 oder 11 der elektronische Index sowie mindestens ein elektronischer Unterindex erstellt wurde, wobei die Berechnung einer Treffermenge für eine Suchkonstellation so erfolgt, daß

(0a) aus einer Suchkonstellation aus Indexobjekten für jeden Unterindex eine Unterkonstellation bestimmt wird, indem auf jedes Indexobjekt der Suchkonstellation die zum Unterindex zugehörige Vergröberungsvorschrift angewendet wird,

(1) für jeden Unterindex eine Untertreffermenge bezüglich der jeweiligen Unterkonstellation bestimmt wird, und

(2) aus den so bestimmten Untertreffermengen die Schnittmenge gebildet wird, welche die Treffermenge darstellt.

**13.** Verfahren nach einem der Ansprüche 1 bis 13, **dadurch gekennzeichnet, daß** die Menge der Indexobjekte aus Musiknoten besteht.

**14.** Verfahren nach Anspruch 14, **dadurch gekennzeichnet, daß** die Musiknoten als Indexobjekte durch eine Tonhöhe und eine Einsatzzeit gekennzeichnet sind, wobei die Einsatzzeit durch eine Taktposition und eine metrische Position eindeutig bestimmt ist, und die Einteilung der Noten in Klassen so vorgenommen wird, das eine Klasse genau die Noten beinhaltet, die durch eine übereinstimmende metrische Position und eine übereinstimmende Tonhöhe gekennzeichnet sind.

**15.** Datenverarbeitungssystem zur Erstellung eines elektronischen Indexes, geeignet zur schnellen Konstellationssuche, über einer elektronischen Datenbank mit einem Datenbestand, wobei das Datenverarbeitungssystem eine Datenbank, über die es den elektronischen Index erstellt, und ferner Mittel aufweist, welche hierzu gebildete Indexobjekte in Klassen einteilen, welche jeweils aus einem Repräsentanten, nämlich einem Indexobjekt der jeweiligen Klasse und aus Transformationsabbildungen aus einer Menge zulässiger Transformationsabbildungen bestehen, deren Mitglieder (Transformationsabbildungen) jeweils den gewählten Repräsentanten in Indexobjekte des Datenbestandes nur der jeweiligen Klasse überführen.

**16.** Datenverarbeitungssystem zur schnellen Konstellationssuche einer durch Indexobjekte gegebenen Suchkonstellation in einer elektronischen Datenbank, über die, unter Verwendung des Verfahrens nach Anspruch 1 oder des Datenverarbeitungssystems nach Anspruch 15 der elektronische Index erstellt wurde, wobei das Datenverarbeitungssystem Mittel zur Ermittlung einer Treffermenge für eine Suchkonstellation aufweist, die zunächst für jedes Indexobjekt der Suchkonstellation aus der Menge zulässiger Transformationsabbildungen eine Untermenge von Transformationsabbildungen erzeugen, welche das Indexobjekt der Suchkonstellation in die Indexobjekte des Datenbestandes überführen und sodann aus den so erhaltenen Untermengen die Schnittmenge bilden, welche die Treffermenge darstellt.

**17.** Datenverarbeitungssystem zur schnellen Konstellationssuche einer durch eine unscharfe Suchkonstellation gegebenen Suchkonstellation in einer elektronischen Datenbank, über die, unter Verwendung des Verfahrens nach Anspruch 1 oder des Datenverarbeitungssystems nach Anspruch 15 der elektronische Index erstellt wurde, wobei die unscharfe Suchkonstellation durch eine Menge von Komponentenmengen, bestehend jeweils aus Indexobjekten, gegeben ist und das Datenverarbeitungssystem Mittel aufweist, die hieraus eine Menge exakter Suchkonstellationen bilden indem sie alle Suchkonstellationen bilden, die entstehen, wenn jeweils aus jeder der Komponentenmengen genau ein beliebiges Indexobjekt ausgewählt wird und wobei das Datenverarbeitungssystem ferner Mittel zur Ermittlung einer Treffermenge für die unscharfe Suchkonstellation aufweist, die für jede Komponentenmenge des unscharfen Suchmusters eine Untermenge von Transformationsabbildungen bestimmen, bestehend aus allen Transformationsabbildungen, die irgendein Indexobjekt dieser Komponentenmenge in ein Indexobjekt des Datenbestands überführen, und die aus den für alle Komponentenmengen so bestimmten Untermengen die Schnittmenge bilden, welche die Treffermenge darstellt.

**18.** Computerprogrammprodukt zum Laden in den Speicher eines Computers, welches Software-Code-Teile zur Durchführung des Verfahrens nach einem der Ansprüche 1 bis 14 aufweist, während das Computerprogrammprodukt auf dem Computer abläuft.

**19.** Computerprogrammprodukt, welches ein computerlesbares Medium mit Computerprogramm-Code-Mitteln aufweist und bei dem nach Laden des Computerprogramms der Computer durch das Programm zur Durchführung des Verfahrens nach einem der Ansprüche 1 bis 14 veranlaßt wird.

# FIG. 1

Universum möglicher
Datenobjekte
Universum möglicher
Indexobjekte
Datenbestand der
Datenbank
Datenbestand der
Indexobjekte
Datenobjekte
Indexobjekte
Umkehrvorschrift
Vergröberungsvorschrift

# FIG. 2

Datenobjekt zu einem Wort
der Textdatenbank
Text = "Auto"
Wortposition im Text = 16423
Nutzdaten
Indexobjekt zu diesem
der Datenobjekt
Text = "Auto"
Seitennummer = 17

# FIG. 3

0
1
2
3
Landkarte 0
Landkarte 1
Landkarte 2
Suchmuster
1
2
3
4
5
6
7

4
(2)
(0;2)
(0;2)
(1)
(2)
(0;2)
(1)
(1)
(0)
(0;1)
1
2
3
4
5
6
7

FIG. 4

g
f#
f
e
d#
d
c#
c
0
1
2
3
4
5
6
7

FIG. 5

g
f#
f
e
d#
d
c#
c
0
1

FIG. 6

g
f#
f
e
d#
d
c#
c
2
3

FIG. 7

1
2
3
4
5
6
7

FIG. 8

FIG. 9

1
2
3
4
5
6
7

Europäisches Patentamt

# EUROPÄISCHER RECHERCHENBERICHT

Nummer der Anmeldung
EP 00 12 7947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 00 49527 A (MOSS SIMON ;TURNER MICHAEL (GB); ZANELLI PAUL (GB); P C MULTIMEDIA) 24. August 2000 (2000-08-24) * das ganze Dokument * --- | 1-5, 15-19 | G06F17/30 |
| Y | SUBRAMANYA, S.R. ET AL: "Automated Classification of Audio Data and Retrieval Based on Audio Classes" INTERNATIONAL CONFERENCE ON COMPUTERS AND THEIR APPLICATIONS, 'Online! April 1999 (1999-04), XP002166621 Mexico, Cancun Gefunden im Internet: <URL:http://www.umr.edu/{subra/publ/paperd/cata99a.ps> 'gefunden am 2001-05-04! * das ganze Dokument * --- | 1-19 | |
| Y | SUBRAMANYA S R ET AL: "Use of transforms for indexing in audio databases" PROCEEDINGS THIRD INTERNATIONAL CONFERENCE ON COMPUTATIONAL INTELLIGENCE AND MULTIMEDIA APPLICATIONS. ICCIMA'99 (CAT. NO.PR00300), PROCEEDINGS THIRD INTERNATIONAL CONFERENCE ON COMPUTATIONAL INTELLIGENCE AND MULTIMEDIA APPLICATIONS. ICCIMA'99, NEW DE, Seiten 278-284, XP002166622 1999, Los Alamitos, CA, USA, IEEE Comput. Soc, USA ISBN: 0-7695-0300-4 * das ganze Dokument * --- -/-- | 1-19 | RECHERCHIERTE SACHGEBIETE (Int.Cl.7) G06F |

Der vorliegende Recherchenbericht wurde für alle Patentansprüche erstellt

| Recherchenort | Abschlußdatum der Recherche | Prüfer |
|---|---|---|
| DEN HAAG | 7. Mai 2001 | Abbing, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 00 12 7947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | BROWN J C ET AL: "Feature dependence in the automatic identification of musical woodwind instruments" JOURNAL OF THE ACOUSTICAL SOCIETY OF AMERICA, MARCH 2001, ACOUST. SOC. AMERICA THROUGH AIP, USA, Bd. 109, Nr. 3, Seiten 1064-1072, XP000996868 ISSN: 0001-4966 * das ganze Dokument * --- | 1-3,15, 18,19 | |
| A | EP 0 955 592 A (CANON KK) 10. November 1999 (1999-11-10) * das ganze Dokument * ----- | 1-3,15, 18,19 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 7. Mai 2001 | Abbing, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 00 12 7947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2001

| Im Recherchenbericht angeführtes Patentdokument | Datum der Veröffentlichung | Mitglied(er) der Patentfamilie | Datum der Veröffentlichung |
|---|---|---|---|
| WO 0049527 A | 24-08-2000 | AU 2678600 A | 04-09-2000 |
| EP 0955592 A | 10-11-1999 | AU 718035 B | 06-04-2000 |
| | | AU 2385499 A | 25-11-1999 |
| | | JP 2000035796 A | 02-02-2000 |
| | | US 6201176 B | 13-03-2001 |

EPO FORM P0461

Für nähere Einzelheiten zu diesem Anhang : siehe Amtsblatt des Europäischen Patentamts, Nr.12/82